**Europäisches Patentamt**

**European Patent Office**

**Office européen des brevets**

(19)

(11) Veröffentlichungsnummer: **0 102 621**

**A2**

(12) **EUROPÄISCHE PATENTANMELDUNG**

(21) Anmeldenummer: **83108596.4**

(22) Anmeldetag: **31.08.83**

(51) Int. Cl.³: **B 62 H 5/16**

(30) Priorität: **01.09.82 DE 3232561**
**12.07.83 DE 3325123**

(43) Veröffentlichungstag der Anmeldung:
**14.03.84 Patentblatt 84/11**

(84) Benannte Vertragsstaaten:
**AT BE CH DE FR GB IT LI LU NL SE**

(71) Anmelder: **Firma Aug. Winkhaus**
**August-Winkhaus-Strasse 78**
**D-4404 Telgte(DE)**

(72) Erfinder: **Kortenbrede, Ludger**
**Delsener Heide 14**
**D-4404 Telgte(DE)**

(74) Vertreter: **Weickmann, Heinrich, Dipl.-Ing. et al,**
**Patentanwälte Dipl.-Ing. H.Weickmann Dipl.-Phys.Dr.**
**K.Fincke Dipl.-Ing. F.A.Weickmann Dipl.-Chem. B. Huber**
**Dr.-Ing. H. Liska Dipl.-Phys.Dr. J. Prechtel Postfach**
**860820**
**D-8000 München 86(DE)**

(54) Steckriegelschloss, insbesondere für Zweiradfahrzeuge.

(57) Bei einem Steckriegelschloß für Zweiradfahrzeuge mit einem, an einem Fahrradgabelteil (112a) starr befestigten Schloßhalter (116) und einem mit einem Schloßteil (120) versehenen Steckriegel (122), welcher an den Schloßhalter (116) in einer Absperrstellung und einer Fahrtstellung ansteckbar und dort verriegelbar ist, wird zur Verringerung der Herstellungskosten sowie des Gewichts vorgeschlagen, den Schloßhalter (116) im wesentlichen plattenförmig auszubilden und das Schloßgehäuse (140) am Schloßhalter (116) in den beiden Stellungen je über eine Ausnehmung-Vorsprungs-Verbindung anzubringen.

FIG.1

EP 0 102 621 A2

PATENTANWÄLTE    DIPL.-ING. H. WEICKMANN, DIPL.-PHYS. DR. K. FINCKE
DIPL.-ING. F. A. WEICKMANN, DIPL.-CHEM. B. HUBER
DR.-ING. H. LISKA , Dipl.-Phys. Dr. J. Prechtel

8000 MÜNCHEN 86
POSTFACH 860 820
MÖHLSTRASSE 22
TELEFON (089) 98 03 52
TELEX 5 22 621
TELEGRAMM PATENTWEICKMANN MÜNCHEN

PRA

Firma Aug. Winkhaus

August-Winkhaus-Straße

4404 Telgte/Westf.

WT 8212.1.

Steckriegelschloß, insbesondere für Zweiradfahrzeuge

Die Erfindung betrifft ein Steckriegelschloß nach dem Oberbegriff des Anspruchs 1.

Bei einem bekannten Steckriegelschloß dieser Art besteht der Schloßhalter entweder aus einem massiven Körper oder aus einem aus Metall gefertigten Innenteil und einer aus Kunststoff gefertigten Abdeckkappe (DE-OS 31 27 468), wobei in beiden Fällen zwei zueinander rechtwinklig verlaufende, den Körper vollständig durchsetzende Führungsbohrungen für den Steckriegel samt Schloßteil am Nachlaufende des Steckriegels vorgesehen sind. Um zu verhindern, daß diese Führungsbohrungen den Schloßhalter in seiner mechanischen Festigkeit allzusehr schwächen, muß der Schloßhalter relativ groß dimensioniert und mechanisch stabil ausgeführt sein. Dies führt zu relativ hohen Herstellungskosten für den Schloßhalter; auch ist das Gewicht des Schloßhalters relativ groß, was insbesondere bei Fahrrädern sehr unerwünscht ist.

Demgegenüber liegt die Aufgabe der Erfindung darin, ein Steckriegelschloß eingangs genannter Art mit verringerten Herstellungskosten und verringertem Gewicht bereitzustellen.

Diese Aufgabe wird durch das Kennzeichen des Anspruchs 1 gelöst. Der Herstellungsaufwand für den plattenförmigen Schloßhalter sowie dessen Gewicht sind gering; von besonderem Vorteil ist, daß der im wesentlichen plattenförmige, ggf. mit seiner Rückseite an das Rahmenteil angeschweißte Schloßhalter bei vollständig abgenommenem Schloßgehäuse ein angenehmes Äußeres bietet. Auch ist in diesem Falle die Gefahr eines Hängenbleibens von Gegenständen oder Kleidungsstücken am freiliegenden Schloßhalter vergleichsweise gering. Es besteht folglich die Möglichkeit, mit äußerst geringen Zusatzkosten von vorneherein sämtliche Fahrradrahmen mit dem Schloßhalter zu versehen und es dem Handel oder dem Endverbraucher zu überlassen, ob er das Steckriegelschloß tatsächlich einsetzt. Das minimale Gewicht sowie die unauffällige Erscheinung des Schloßhalters bei abgenommenem Schloßteil mit Steckriegel ermöglichen es dem sportlichen Fahrer und bzw. dem Rennfahrer das vergleichsweise schwere Schloßteil mit Riegel bedarfsweise abzunehmen.

In manchen Anwendungsfällen reicht es aus, wenn lediglich auf einer Seite des abzusperrenden Rades ein Lagerteil für den Steckriegel, nämlich der Schloßhalter, angebracht ist. Zur Erhöhung der Einbruchssicherheit ist es jedoch von Vorteil, ein Gegenlager gemäß den Ansprüchen 2 und 3 vorzusehen. Ein Verschwenken des Steckriegels um den Schloßhalter bei in das Gegenlager eingreifendem Steckriegel ist somit zuverlässig ausgeschlossen, was es auch erlaubt, die mechanische Festigkeit der gegenüberliegenden Steckriegellagerstelle (Schloßhalter, Schloßteil), was derartige Schwenkbewegungen betrifft, weniger hoch auszulegen.

Gemäß Anspruch 4 läßt sich das Schloßteil am Schloßhalter in der ersten und/oder zweiten Endstellung sperrend festlegen.

Gemäß Anspruch 5 weist das Riegelteil einen Exzenter und/ oder einen Radialstift auf.

Gemäß Anspruch 6 kann der Steckriegel vom Riegelteil unabhängig am Schloßgehäuse starr oder verdrehbar angebracht sein, was zum einen eine Beschädigung des Schlosses insbesondere der Zuhaltestifte eines vorzugsweise eingesetzten Zylinderschlosses ausschließt, wenn der Steckriegel unbefugt gewaltsam um seine Längsachse verdreht wird; zum anderen ergeben sich reduzierte Herstellungskosten.

Es kommen viele Formen der Verbindung von Schloßgehäuse und plattenförmigem Schloßhalter in Frage, so z.B. eine Verbindung über einen am Schloßgehäuse seitlich vorstehenden Haltevorsprung, insbesondere Haltestift, welcher mit seinem freien Ende voraus in eine entsprechende Ausnehmung des Schloßhalters einsteckbar ist. Besonders bevorzugt ist jedoch die Nutfeder-Verbindung gemäß Anspruch 7, da diese für einen mechanisch besonders stabilen Zusammenhalt von Schloßgehäuse und Schloßhalter sorgt bei einfacher Herstellbarkeit der Verbindung. Bevorzugt verläuft hierbei die Längsrichtung der Nut bzw. Feder parallel zur Steckriegellängsachse. Beim Verschließen des Fahrrad-Steckriegelschlosses wird der Steckriegel mit seinem Vorlaufende voraus zwischen die Fahrradspeichen geschoben, wobei am Ende dieser Bewegung die Feder in die Nut einfädelt und in der unveränderten Richtung bis in die erste Endstellung des Schloßgehäuses vorzuschieben ist. Diese Bewegungsabfolge ist ergonomisch vorteilhaft.

Besonders kompakte Bauform mit dem zusätzlichen Vorteil, daß die Ränder des Schloßhalters für Einbruchswerkzeuge unzulänglich sind, ergibt sich aus der im Anspruch 8 angegebenen Ausführungsform. Bevorzugt hat der Schloßhalter im

-4-

wesentlichen quadratischen Umriß (Anspruch 9), so daß das Schloßgehäuse in den beiden, einen Winkel von 90° miteinander einschließenden Endstellungen jeweils zwei einander gegenüberliegende Ränder des Schloßhalters hintergreifen.

Die Kröpfung gemäß Anspruch 10 erlaubt es, den plattenförmigen Schloßhalter unmittelbar an den Träger, ggf. das Fahrradrahmenteil, festzuschrauben, festzuschweißen oder dergl., wobei dennoch ausreichend Platz zwischen dem Träger und den Rändern des Schloßhalters ist für die diese Ränder hintergreifenden Bauelemente des Schloßgehäuses. Die mechanisch stabile Schloßhalterform, gemäß Anspruch 11, kann man durch einfaches Prägen erhalten.

Zur Erleichterung des Punktverschweißens des Schloßhalters mit dem Träger weist dieser einen Anschweißwulst gemäß Anspruch 12 auf. Bei kreisringförmigem Anschweißwulst und 90° Rotationssymmetrie des Umrisses des quadratischen Schloßhalters braucht bei der Montage des Schloßhalters am Träger lediglich darauf geachtet zu werden, daß der jeweils oben liegende Rand horizontal verläuft bzw. auf das Gegenlager zu läuft.

Die Führungsleisten gemäß Anspruch 13 ergeben eine mechanisch besonders stabile, leicht herzustellende Nut-Feder-Verbindung, wobei ein- und dieselbe, durch die beiden Führungsleisten gebildete Nut zur Festlegung des Schloßgehäuses in beiden Endstellungen am Schloßhalter eingesetzt werden kann; in der einen Endstellung übergreifen die Führungsleisten ein Paar der vier Ränder des quadratischen Schloßhalters, in der anderen Endstellung das andere Paar. Für den Fall, daß es zweckmäßiger ist, in beiden Endstellungen dieselben gegenüberliegenden Ränder des Schloßhalters für die jeweilige Verbindung einzusetzen, können am Schloßgehäuse, insbesondere an zwei unterschiedlichen Seiten, insgesamt

-5-

zwei Nuten mit jeweils vier Führungsleisten vorgesehen sein.

Der Anschlag gemäß Anspruch 14 erleichtert zum einen die Bedienung des Schlosses, da die jeweilige Endstellung, in der zu verriegeln ist, problemlos durch Vorschieben des Schloßgehäuses bis zum Anschlag mit dem Schloßhalter einzustellen ist. Zum anderen muß die noch vorzunehmende Verriegelung lediglich sicherstellen, daß das Schloßgehäuse gegenüber dem Schloßhalter in einer einzigen Bewegungsrichtung arretiert ist, nämlich in Richtung weg vom Anschlag des Schloßhalters.

Gemäß Anspruch 15 greift das Riegelteil in eine Eingriffsausnehmung des Schloßhalters ein oder liegt an einem dem Anschlag gegenüberliegenden Schloßhalterrand an. In ersterem Falle erübrigt sich ein Anschlag; im letzteren Falle kann der Schloßhalter durchgehend ohne Ausnehmungen ausgebildet sein, was dessen Herstellung und mechanische Festigkeit erhöht.

Die Vorteile der im Anspruch 16 angegebenen Schloßgehäuse-Bauweise liegen u.a. darin, daß durch entsprechendes Ausstanzen der Schloßplatten auch komplizierte Gehäuseformen, insbesondere mit komplizierten Gehäuseinnenräumen, kostengünstig hergestellt werden können; hinzu kommt, daß die Schloßplatten aus ggf. gehärteten Stahlblechen bestehen können, was hohe Festigkeit und damit hohe Einbruchssicherheit gewährleistet.

Bevorzugte Schloßplattenformen sind in den Ansprüchen 18 bis 20 angegeben.

Die Schloßgehäusebauweise gemäß Anspruch 21 zeichnet sich durch niedrige Herstellungskosten, insbesondere einfacher Montage und geringes Gewicht aus.

In der Ausführungsform gemäß Anspruch 22 ergibt sich ein erleichterter Zusammenbau mit der Möglichkeit einer Vormontage des Steckriegels an einer der beiden Stirnwände. Das erfindungsgemäß in das Schloßgehäuse integrierte eigentliche Schloß, vorzugsweise Zylinderschloß mit zur Riegelachse paralleler bzw. mit dieser zusammenfallender Schließzylinderachse, wird beim Zusammenbau des Schloßteils zwischen die beiden Schloßgehäuseteile eingefügt, beispielsweise in das andere Gehäuseteil eingesetzt, woraufhin beide Gehäuseteile schubladenartig ineinandergesteckt werden. Diese besonders einfache Vorgehensweise erlaubt den Einsatz von Zusammenbau-Automaten. Auch ist das auf diese Weise gebildete Schloßgehäuse allseits von Metallwänden der Gehäuseteile umschlossen, was hohe Einbruchssicherheit gewährleistet bei niedrigem Gewicht.

Die bevorzugten Ausführungsformen gemäß den Ansprüchen 23 und 24 bieten den Vorteil, daß zur Ausbildung der Nuten lediglich die Randstreifen des ersten und des zweiten Riegelteils entsprechend umzubiegen sind.

Um mit einfachen Mitteln zuverlässig ein Klappern des Schloßgehäuses am Schloßhalter während der Fahrt auszuschließen, ist die Weiterbildung der Erfindung gemäß Anspruch 25 vorgesehen.

Die Klemmung des Schloßträgers im Sinne eines Zusammendrückens beider Plattenlängsränder erreicht man gemäß Anspruch 26 durch einfaches Einwärtsbiegen der Randstreifen.

Die Klemmfestlegung im Sinne eines Zusammendrückens der Vorder- und Rückseite des Schloßhalters erhält man mit einfachen Mitteln gemäß Anspruch 27.

Derartige Klemmverbindungen bieten neben der Verhinderung von Klappergeräuschen auch noch den Vorteil, daß größere Fertigungsungenauigkeiten ohne Weiteres ausgeglichen werden können, insbesondere dann, wenn gemäß Anspruch 28 das Riegelteil an den Schloßträger unter Federvorspannung angreift.

Wählt man den Keilwinkel der Klemmfestlegung der Vorder- und Rückseite des plattenförmigen Schloßträgers derart groß, daß die beim Abnehmen des Schloßteils aufzuwendenden Löse-Kräfte nicht allzu groß sind, so besteht die Gefahr, daß das Nachlaufende des plattenförmigen Schloßhalters um die durch die Keilvorsprünge gebildete Drehachse hin und her verschwenkt. Um das hierdurch ermöglichte Klappern nicht aufkommen zu lassen, werden die Maßnahmen des Anspruchs 29 vorgeschlagen.

Die Herstellung und Anbringung des Riegelteils am Schließzylinder gestalten sich in der Ausführungsform gemäß Anspruch 30 besonders einfach. Hierbei kann eine Führungsöffnung gemäß Anspruch 31 vorgesehen sein, welche die mechanische Stabilität des Schlosses erhöht (größerer Biegewiderstand des Sperriegels). Der Sperriegel ist jedoch weiterhin vom Schließzylinder, was die Drehbewegung betrifft, entkoppelt, so daß eine gewaltsame Verdrehung des Riegels um seine Achse nicht zu einer Schädigung des Zylinderschlosses führt.

Das Abnehmen und Aufsetzen des Schloßteils auf den Schloßhalter ist nur bei in eine Freigabestellung bewegtem Riegelteil möglich. Um beim Aufsetzen des Schloßteils sicherzustellen, daß das Riegelteil sich nicht inzwischen versehentlich in seine Schließstellung bewegt hat, wird ein Druckpunkt gemäß Anspruch 32 vorgeschlagen.

Es müssen hierzu keine größeren Änderungen, insbesondere keine Änderungen des Zylinderschlosses, vorgenommen werden, wenn dieser Druckpunkt gemäß Anspruch 33 realisiert ist.

Der Gegenhalter ist in der bevorzugten Ausführungsform gemäß Anspruch 34 kostengünstig herstellbar und bietet ein angenehmes Äußeres. Hervorzuheben ist, daß die Kappe den Grundkörper bis auf die Befestigungsseite vollständig umhüllt, was größere Freiheit bei der Gestaltung von Form und Aussehen des abgedeckten, . und daher nicht sichtbaren, Grundkörpers zuläßt.

Die Montage des Gegenhalters gestaltet sich besonders einfach, wenn die Kappe mit dem Grundkörper gemäß Anspruch 35 verrastet ist. Die Maßnahme gemäß Anspruch 36 erleichtert das Zuammenfügen.

Um bei geringem Materialaufwand für die Kappe dennoch ausreichende mechanische Stabilität zu erhalten, sind Versteifungsrippen gemäß Anspruch 37 vorgesehen.

Der Gegenhalter sowie das Gegenlager können, wie bereits eingangs erwähnt, bereits bei der Herstellung des Zweiradfahrzeugs an diesem angebracht sein. Das Steckriegelschloß kann jedoch auch nachträglich an einem Zweiradrahmen angebracht werden. Diese Art der Nachrüstung erlaubt die Rohrbefestigung gemäß Anspruch 38, welche jedoch auch für sonstige Fahrradteile, wie z.B. Schwenkriegelschlösser, Schiebeschlösser, Fahrraddynamos oder dergl., einsetzbar ist. Von Vorteil ist hierbei, daß aufgrund der radialen Anordnung der Anzugsschraube es bei der Anbringung der Rohrbefestigung nicht zu Relativbewegungen, insbesondere in Rohrumfangsrichtung liegende Schwenkbewegungen, einzelner Teile der Rohrbefestigung kommt; derartige Bewegungen führen zu einem Verkratzen des Rohr-Außenumfangs. Der bauliche Aufwand ist gering; die mechanische Festigkeit ist hoch. Die kraftschlüssige Verbindung zwischen den Bügelenden und dem Zugelement läßt sich mit einfachen Mitteln gemäß Anspruch 41 erhalten.

Besonders bevorzugt ist die Ausführungsform gemäß Anspruch

0102621

42, da hierdurch der unbefugte Zugang zu den umgebogenen Riegelenden zum Zwecke des Aufbrechens der Rohrbefestigung wesentlich erschwert ist.

Die Maßnahme gemäß Anspruch 43 erleichtert den Zusammenbau.

Es entfällt die gesonderte Befestigung des Schloßhalters bzw. des Gegenlagers an der bereits am Rohr angebrachten Rohrbefestigung, wenn gemäß Anspruch 44 das jeweils zu befestigende Teil zusammen mit der Rohrschellen-Befestigung montiert wird.

Um ein Verdrehen der Rohrschellen-Befestigung um eine zur Achse : der Anzugsschraube parallele oder mit dieser zusammenfallende Schwenkachse gegenüber dem die Rohrschellen-Befestigung tragenden Rohr auszuschließen oder zumindest wesentlich zu erschweren, sind die Stützen gemäß Anspruch 39 mit Aufnahmemulden für das Rohr versehen.

Ist das die Rohrschellen-Befestigung tragende Rohr Teil eines Zweirad-Rahmens, so läuft die Rohrachse im allgemeinen nicht genau senkrecht zur Riegelachse des sich zum Absperren des Rads in der ersten Endstellung befindlichen Schloßteils. Das Abstützteil kann nun parallel zur Rohrachse angeordnet sein (die quer zu den Stützen gerichtete Mittelgerade des Abstützteils verläuft parallel zur Rohrachse); der Schloßhalter bzw. das Gegenlager ist dann dementsprechend verdreht um die Achse der Anzugsschraube am Abstützteil anzubringen. Bei dieser Ausführungsform kann das Merkmal gemäß Anspruch 42 ohne weiteres verwirklicht werden. In der Ausführungsform gemäß Anspruch 40 dagegen kann das Abstützteil von vorneherein in horizontaler Orientierung am geneigten Rohr angebracht werden, was die Montage erleichtert, da keine gegenseitige Dreh-Justierung zwischen Abstützteil und am Abstützteil jeweils anzubringendem Schloßhalter bzw. Gegenlager vorzunehmen ist.

Bei einer unmittelbaren Verschweißung oder Verlötung des Schloßhalters am Rahmen mit anschließender Rahmenlackierung (z.B. Pulverbeschichtung) können Probleme aufgrund der nicht völlig exakt einzuhaltenden Dicke der Lackschicht bzw. Pulverschicht entstehen. Ist nämlich die Schloßhalterplatte zu dick, so kann es zu einem Klemmen innerhalb der Gehäusenut kommen und, bei mehrmaligem Gebrauch, zu einer Beschädigung der Lackschicht. Bei zu geringer Lackdicke kann es, sofern man nicht eine Klemmfestlegung mit Federvorspannung gemäß einer der vorstehend beschriebenen Ausführungsformen einsetzt, zu Klappergeräuschen kommen. Um diesen Nachteil zu vermeiden, wird gemäß Anspruch 45 ein Anschweiß- oder Anlötteil sowie eine gesonderte Schloßhalterplatte verwendet. Die Schloßhalterplatte wird nicht zusammen mit dem Rahmen lackiert und kann aus korrosionsfestem Material, wie z.B. Edelstahl, bestehen. Die Maßnahme des Anspruchs 46 dient der drehfesten Festlegung der beiden Teile aneinander.

Die Erfindung betrifft auch ein Schloß, insbesondere Steckriegelschloß für Zweiradfahrzeuge mit einem am Schloßgehäuse zwischen einer Schlüsselloch-Freigabestellung und einer Schlüsselloch-Abdeckstellung verschwenkbar angebrachten Schlüsselloch-Abdeckung. Ein derartiges Schloß ist aus der DE-PS 840 358 bekannt. Die Schlüsselloch-Abdeckung 12 besteht hierbei aus einem länglich ovalen, im Bereich eines Längsendes am Gehäuse schwenkbar angebrachten Plättchen. In der Schlüsselloch-Freigabestellung ragt das Plättchen weit über den Gehäuseumriß hinaus. In dieser Stellung kann das Plättchen ohne Schwierigkeiten versehentlich abgebogen oder gar abgebrochen werden. Dementsprechend besteht eine gewisse Gefahr, daß der jeweilige Benutzer versehentlich an dieser Abdeckung hängen bleibt oder sich gar verletzt. Um diese Nachteile zu beseitigen, wird die Ausbildung gemäß dem Kennzeichen des Anspruchs 47 vorgeschlagen. Aufgrund der U-Form und der Anlenkung der beiden Seitenschenkel der U-Form am Gehäuse ergibt sich zum einen eine kompakte, mechanisch stabile Bauform und zum anderen ein gewisser Abweis-Effekt (ähnlich einem Visier), welcher ein Hängenbleiben oder gar Verletzungen ausschließt. Zudem erhält man ein angenehmes Äußeres und das bei geringem Herstellungsaufwand, insbesondere bei Ausbildung des Schwenkteils als Kunststoffteil (Anspruch 51).

Die beiden Schwenklager der Seitenschenkel sind bevorzugt gemäß Anspruch 48 ausgebildet, was, bei einfacher Herstellbarkeit, eine durchgehende und daher optisch ansprechende Außenseite der Seitenschenkel sichert.

Je nach Anwendungsfall kann die Schwenkachse des Schwenkteils beispielsweise senkrecht zur Schlüsseleinführung verlaufen, so daß dann das Schwenkteil visierartig vor der Schlüsseleinführöffnung zu verschwenken ist. Der Mittelschenkel der U-Form deckt also in der Schlüsselloch-Abdeckstellung das Schlüsselloch ab. In der besonders bevorzugten Ausührungsform gemäß Anspruch 49 verläuft die Schwenkachse im wesentlichen parallel zur Schlüsseleinführ-Richtung, so daß einer der beiden Seitenschenkel der U-Form in der Schlüsselloch-Abdeckstellung das Schlüsselloch abdeckt. Da, im Gegensatz zur vorstehend angegebenen visierähnlichen Ausführungsform, dieser Schenkel sich bei der Schwenkbewegung des Schwenkteils in einer Ebene bewegt, kann dieser Schenkel unmittelbar an der das Schlüsselloch tragenden Seitenfläche des Gehäuses anliegen bzw. zu dieser geringen Abstand einhalten. In der Schlüsselloch-Abeckstellung deckt also der Seitenschenkel des Schwenkteils das Schlüsselloch im wesentlichen spaltfrei ab, so daß das Eindringen von Schmutz und Feuchtigkeit in das Schloß durch das Schlüsselloch hindurch zumindest stark eingeschränkt ist.

Um im Falle eines Steckriegelschlosses die erfindungsgemäße Abdeckung problemlos anbringen zu können, werden die Merkmale gemäß Anspruch 50 vorgeschlagen. Ein besonderer Vorteil sämtlicher vorstehend beschriebener Ausführungsformen des Schwenkteils liegt darin, daß das Schwenkteil schnell und einfach am Schloßgehäuse anbringbar ist, ohne daß es einer Sicherung der beiden Schwenkgelenke zwischen den Seitenschenkeln und dem Gehäuse gegen axiale Auseinanderbewegung der Gelenkteile bedarf. Das U-förmige Schwenkteil kann nämlich derart biegesteif ausgebildet sein, daß die beiden Seitenschenkel einer Auseinanderbewegung ausreichend Widerstand leisten. Bestehen die beiden Schwenkgelenke beispielsweise jeweils aus einem axialen Vorsprung auf der Innenseite des Seitenschenkels und einer entsprechenden Lager-Ausnehmung im Gehäuse, so kann die Montage dadurch erfolgen, daß die beiden Schenkel vor dem Aufsetzen geringfügig voneinander weg gespreizt werden und anschließend auf das Gehäuse aufgeschoben werden. Die Vorsprünge rasten schließlich in die Ausnehmungen ein.

Die Erfindung wird im folgenden an mehreren bevorzugten Ausführungsbeispielen anhand der Zeichnung erläutert.

Es zeigt:

Fig. 1 eine vereinfachte Gesamtansicht eines an einem teilweise dargestellten Zweirad angebrachten erfindungsgemäßen Steckriegelschlosses;

Fig. 2 eine Schnittansicht der Anordnung gemäß Fig. 1 entlang der Linie II-II;

Fig. 3 eine Schnittansicht der Anordnung gemäß Fig. 1 entlang der Linie III-III;

Fig. 4 eine Seitenansicht in Richtung des Pfeils IV in Fig. 1, teilweise abgebrochen, auf eine zweite Ausführungsform des erfindungsgemäßen Steckriegelschlosses;

0102621

-13-

Fig. 5 eine Vorderansicht des Schloßhalters des Steckriegelschlosses gemäß Fig.4;

Fig. 6 eine gesonderte Ansicht des Schloßteils des Steckriegelschlosses gemäß Fig. 4  (Blickrichtung VI

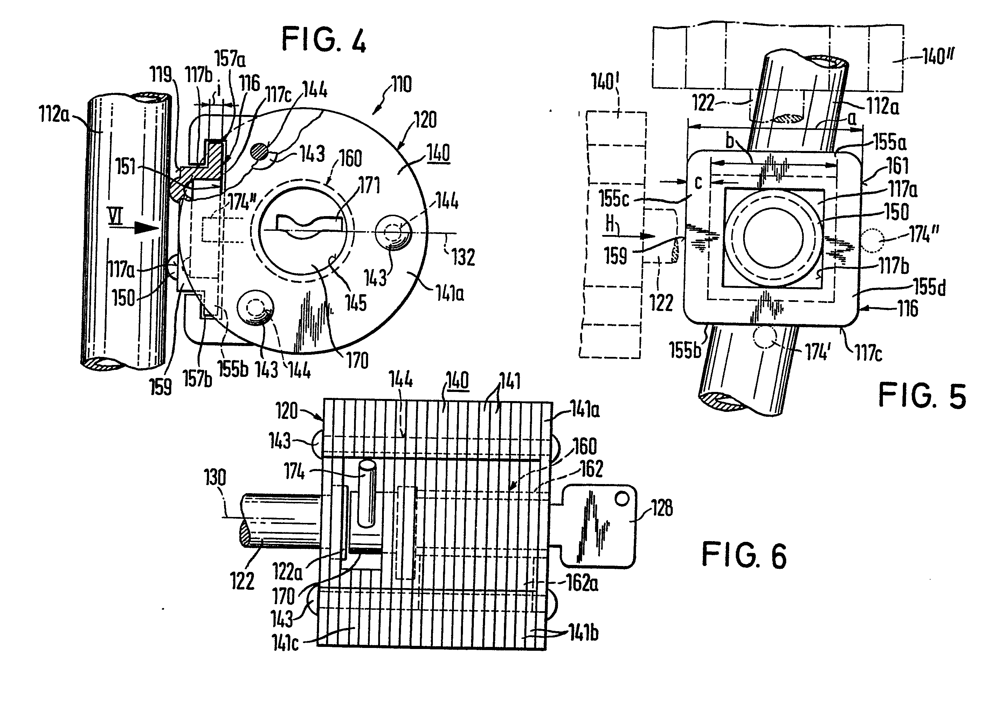

in Fig.4  );

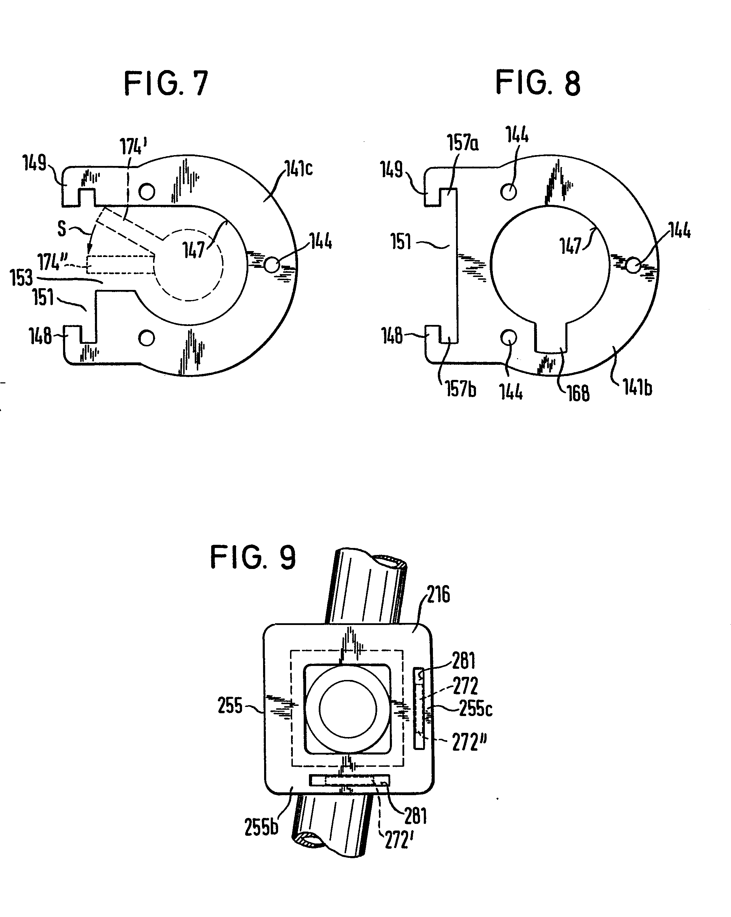

Fig. 7 eine Schloßplatte des Schloßteils gemäß Fig. 6;

Fig. 8 eine weitere Schloßplatte;

Fig. 9 eine Abwandlung des Schloßhalters gemäß Fig. 5
in entsprechender Ansicht;

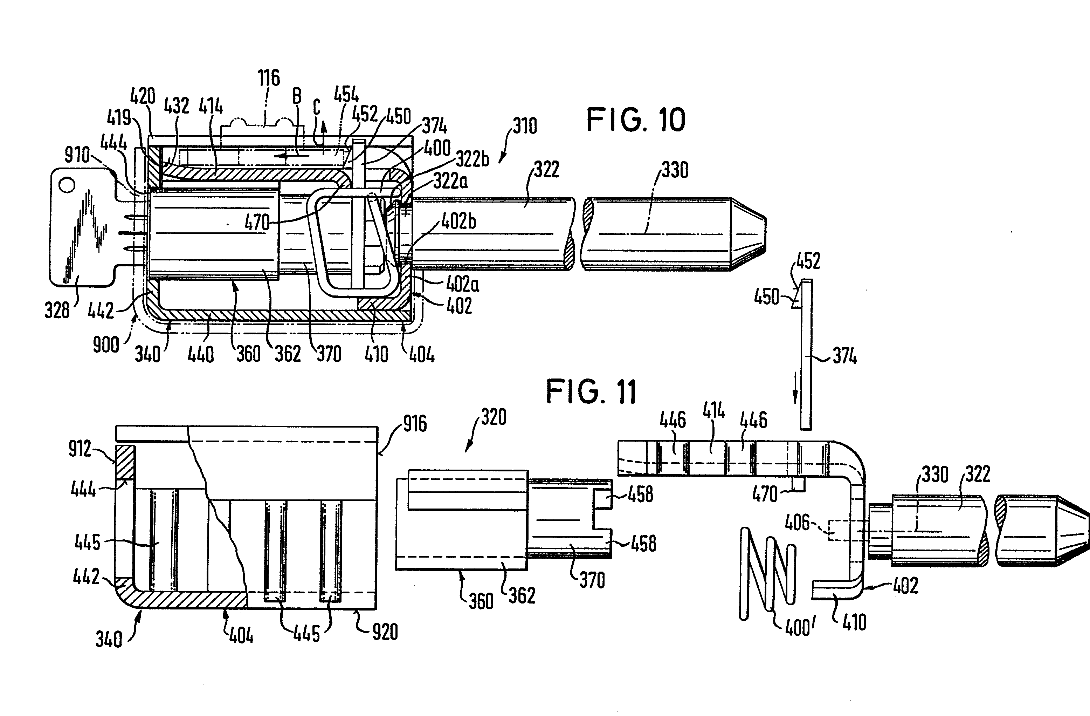

Fig. 10 eine Seitenansicht ähnlich Fig. 6 im Schnitt einer
weiteren Ausführungsform eines Schloßteils;

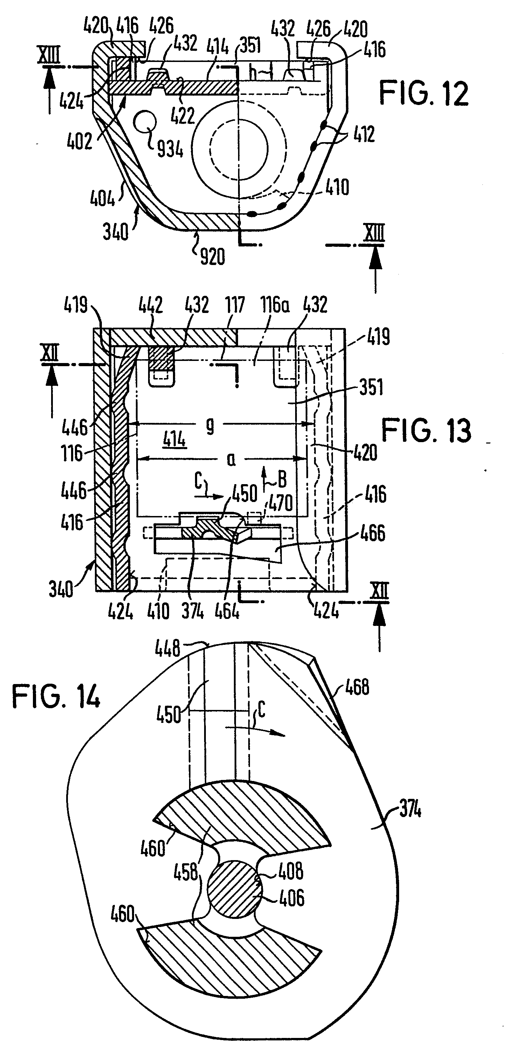

Fig. 11 eine explosionsartige Darstellung des Schloßteils
gemäß Fig. 10;

Fig. 12 einen Schnitt nach Linie XII-XII in Fig. 13 des
Schloßgehäuses des Schloßteils gemäß Fig. 10 und
11;

Fig. 13 einen Schnitt des Schloßgehäuses nach Linie XIII-
XIII in Fig. 12;

Fig. 14 eine vergrößerte Einzeldarstellung des Riegelteils
des Schloßteils gemäß Fig. 10 und 11;

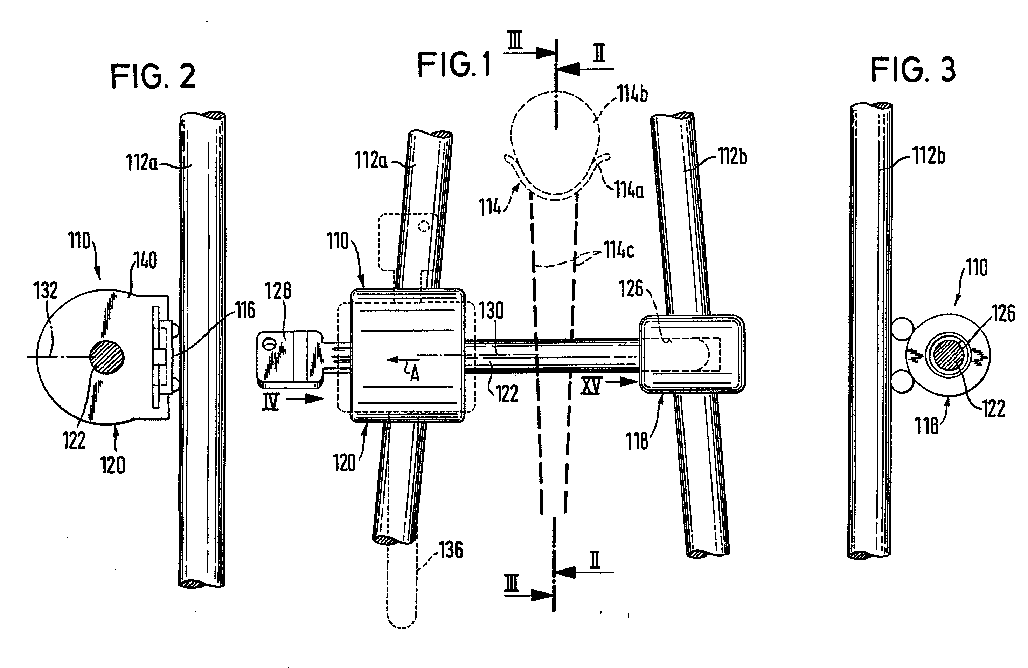

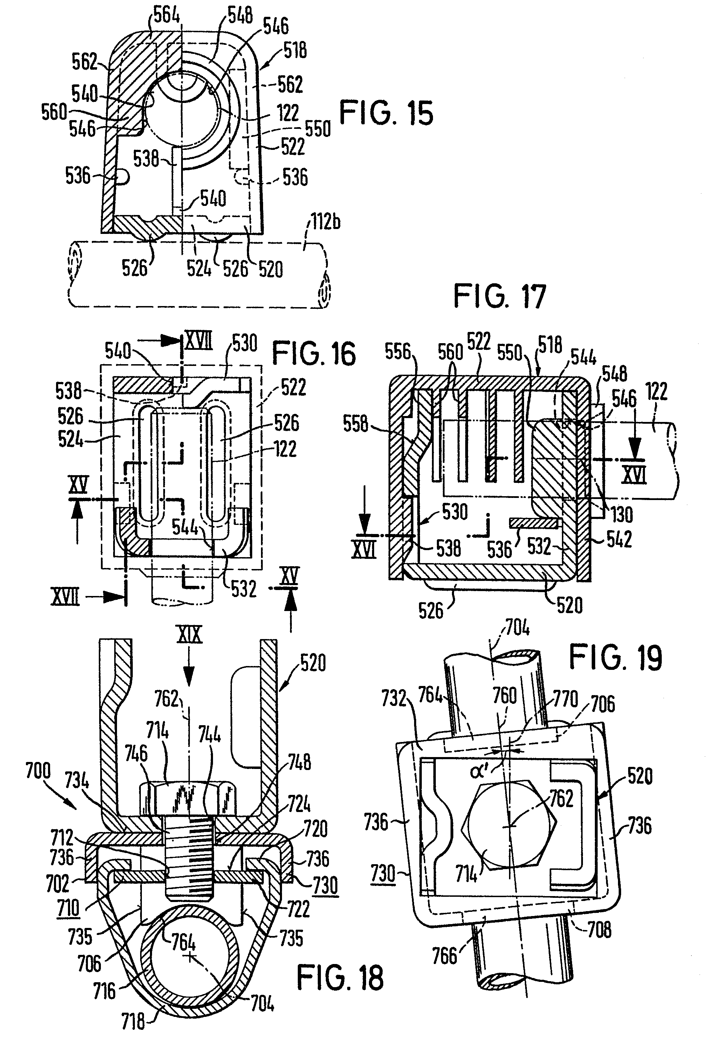

Fig. 15 eine teilweise geschnittene Vorderansicht des
Gegenhalters (Blickrichtung XV in Fig. 1 und
Schnittlinie XV-XV in Fig. 16);

Fig. 16 einen Schnitt durch den Grundkörper des Gegenhalters nach Fig. 15 bei weggelassener Kappe (Schnittlinie XVI-XVI in der Fig. 17);

Fig. 17    einen Schnitt des Gegenhalters gemäß Fig. 15 und
           16 (Schnittlinie XVII-XVII in Fig. 16),

Fig. 18    einen Schnitt durch einen mittels einer Rohrschellen-
           Befestigung am Rahmenrohr nachträglich anbringbaren
           Grundkörper (ähnlich Fig. 16) eines Gegenlagers;

Fig. 19    eine Draufsicht auf den Grundkörper gemäß Fig. 18
           (Blickrichtung XIX in Fig. 18);

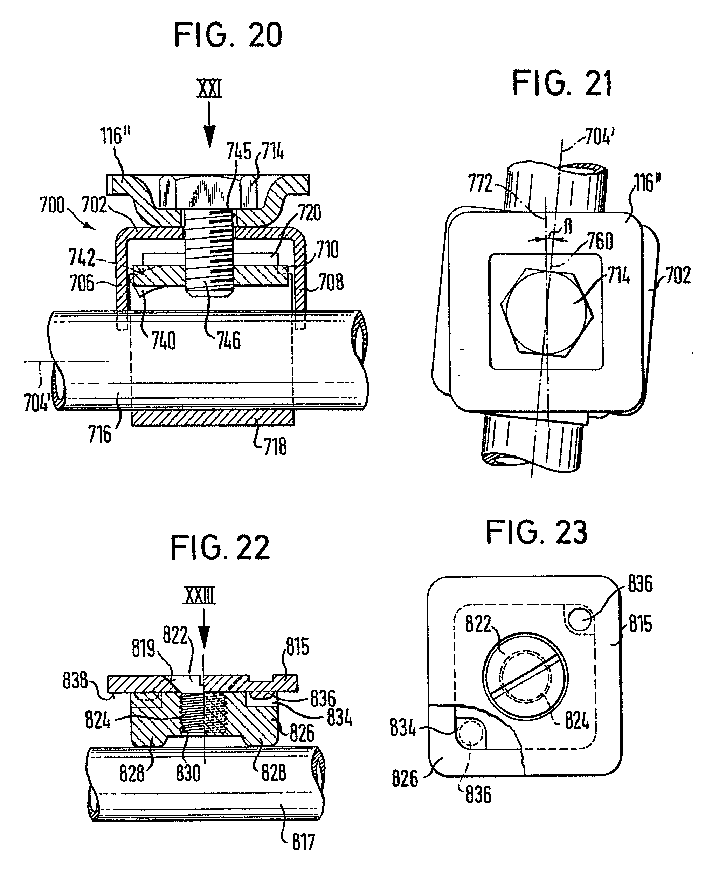

Fig. 20    einen Schnitt längs der Rohrachse durch eine Rohrschellen-Befestigung entsprechend Fig. 18 und 19 jedoch mit einem Schloßhalter anstelle des Grundkörpers.

Fig. 21    eine Draufsicht auf den Schloßhalter in Fig. 20
           (Blickrichtung XXI in Fig. 20);

Fig. 22    einen Schnitt parallel zur Rohrachse durch  einen
           mittels gesondertem Anschweißteil am Rahmenrohr
           befestigten Schloßhalter ;

Fig. 23    eine Draufsicht auf den Schloßhalter gemäß Fig. 22
           (Blickrichtung XXIII in Fig. 22);

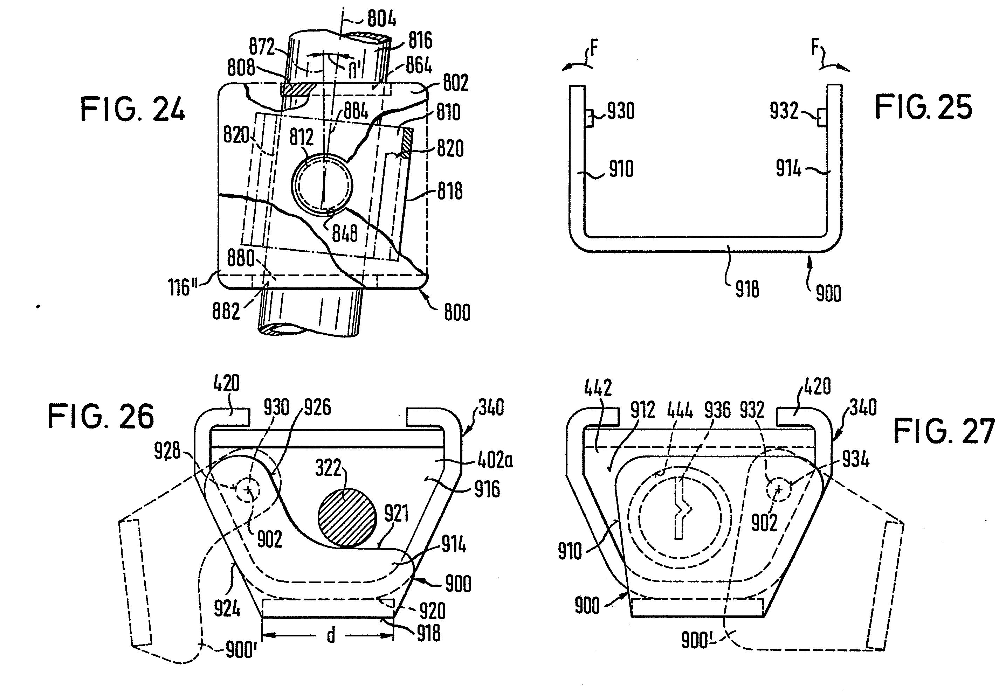

Fig. 24    eine teilweise abgebrochene Draufsicht auf eine
           weitere Ausführungsform einer Rohrschellen-Befestigung mit einem Schloßhalter;

Fig. 25    eine Einzeldarstellung eines Schwenkteils, welches
           als Schlüsselloch-Abdeckung am Schloßgehäuse des
           Steckriegelschlosses gemäß den Fig. 10 - 14 anbringbar ist;

Fig. 26    eine Ansicht entsprechend Fig. 12 auf das steckriegelseitige Stirnende des mit dem Schwenkteil
           gemäß Fig. 25 versehenen Schloßgehäuses und

-15-

Fig. 27  eine Ansicht auf das schlüssellochseitige Stirnende des Schloßgehäuses.

In den Fig. 1 bis 3 ist das allgemein mit 110 bezeichnete
Steckriegelschloß an einem Zweirad montiert dargestellt.
Man erkennt zwei Rahmenteile 112a und 112b, welche Teile
einer Radgabel sind. Die Radgabel umgreift ein mit unterbrochener Linie angedeutetes Rad 114, von welchem eine Felge 114a, ein Radmantel 114b sowie Speichen 114c angedeutet
sind.

Das Steckriegelschloß 110 besteht aus zwei an der Radgabel
starr befestigten Teilen, nämlich einem Schloßhalter 116 und
einem Gegenlager 118 sowie einem beweglichen Teil, nämlich
dem Schloßteil 120 mit Steckriegel 122. Der im folgenden,
insbesondere anhand der Fig. 4 und 5, noch näher zu erläuternde Schloßhalter 116, ist gemäß Fig. 1 am linken Rahmenteil 112a angeschweißt; das Gegenlager 118 ist auf gleicher
Höhe wie der Schloßhalter 116 auf der gleichen Seite in Bezug auf die Fahrtrichtung wie dieser am Rahmenteil 112b
festgeschweißt. Das Zweirad kann nun dadurch abgesperrt
werden, daß das vollständig vom Schloßhalter 116 lösbare
Schloßteil 120 mit Steckriegel 122 mit dem freien Steckriegelende voraus in horizontaler Richtung auf den Schloßhalter 116 aufgeschoben wird und soweit vorgeschoben wird,
bis schließlich das vorlaufende Ende des Steckriegels 122
in eine zylindrische, sacklochartige Aufnahmeöffnung 126
des Gegenlagers 118 eingedrungen ist. In dieser ersten
Endstellung (auch Absperrstellung des Schlosses genannt)
ist das Schloßteil 120 in noch zu erläuternder Weise am
Schloßhalter 116 sperrend festlegbar, woraufhin der in Fig.
1 angedeutete Schlüssel 128 abgezogen werden kann. Man erkennt in Fig. 1, daß der Steckriegel 122 zwischen aufeinanderfolgende Speichen 114c des Rades 114 hindurchgreift und auf diese Weise die Raddrehung blockiert.

Wie anhand der Fig. 5 noch näher erläutert werden wird, kann das Steckriegelschloß 110 in eine zweite Endstellung (auch Fahrtstellung genannt) gebracht werden, in der der Steckriegel 122 das Rad 114 freigibt. Hierzu ist durch entsprechende Betätigung des eingesteckten Schlüssels 128 die Sperrung innerhalb des Schloßteils 120 zu lösen, woraufhin das Schloßteil 120 vom Schloßhalter 116 vollständig abgezogen werden kann (in Fig. 1 in Richtung des Pfeils A). Anschließend wird nach entsprechender Drehung des Schloßteils 120 eine 90°-Drehung um eine in Fig. 2 angedeutete Querachse 132), das Schloßteil 120 mit dem freien Ende des Steckriegels nach unten zeigend von oben her auf den Schloßhalter 120 aufgesteckt und soweit nach unten bewegt, bis das Schloßteil 120 an einem Anschlag des Schloßhalters 116 anschlägt. Diese zweite Endstellung oder Fahrtstellung des Steckriegelschlosses ist in Fig. 1 mit punktierter Umrißlinie 136 angedeutet.

Der Schloßhalter 116, der dieses Aufstecken des Schloßteils 120 in zwei um 90° gegeneinander verdrehten Schloßteilorientierungen erlaubt, besteht gemäß Fig. 4 und 5 aus einem im wesentlichen plattenförmigen Bauteil, welcher hutähnlich geprägt ist. Eine den Hutboden bildende, ebene Bodenwand 117a mit quadratischem Umriß ist unmittelbar am entsprechenden Rahmenteil 112a angeschweißt. Die Punktverschweißung wird durch einen geprägten kreisringförmigen Anschweißwulst 150 innerhalb des quadratischen Umrisses der Bodenwand 117a erleichtert; der Wulst 150 steht auf der in Fig. 4 linken, dem Rahmenteil 112a zugewandten Rückseite 119 der Bodenwand 117a von dieser ab. In entgegengesetzter Richtung, also weg vom Rahmenteil 112a, gehen von den vier Außenrändern der Bodenwand 117a vier Seitenwände 117b rechtwinklig ab, die die zusammenhängende Hutumfangswand bilden. An die von der Bodenwand 117a fernen Ränder der Seitenwände 117b schließt sich ein von den Seitenwänden 117b nach außen abstehender, umlaufender Umfangsrand 117c an. Der Umfangsrand 117c liegt in einer Ebene, welche zur Ebene der Bodenwand 117a parallel ist. Der Umfangsrand 117c entspricht dem Hutrand der erwähnten Hutform (mit quadratischer Hutöffnung). Die Breite i des Umfangsrandes ist an allen Seitenwänden gleich groß, so daß sich ein zum Flächenmittelpunkt der Bodenwand 117a zentrischer quadratischer Außenumfang des Umfangsrandes 117c ergibt, wobei die Quadratseitenlänge a des Umfangsrand-Außenumfangs die Quadratseitenlänge b der Bodenwand 117a übersteigt und zwar um das doppelte der Umfangsrandbreite c (siehe Fig. 5 ).

Das Schloßteil 120 besteht aus einem Schloßgehäuse 140, welches ein in Fig. 6 strichliert angedeutetes Zylinderschloß 160 beherbergt, einem Schließzylinder 170, einem Schließzylindergehäuse 162 und einem die Zuhaltestiftkanäle enthaltenden Gehäusekeil 162a. In Fig. 4 ist die Einstecköffnung 171 des Schließzylinders 170 für den Schlüssel 128 eingezeichnet. Am inneren Ende des Schließzylinders 170 ist ein Radialstift 174 eingesteckt, der der Verriegelung des Schloßteils 120 am Schloßhalter 116 dient. Der Steckriegel 122 ist am Schloßgehäuse 140 frei um seine Längsachse 130 drehbar gelagert; dies wird beispielsweise dadurch erreicht, daß ein umfangsvergrößerter Bund 122a am inneren Ende des Steckriegels 122 vom Schloßgehäuse 140 hintergriffen wird. Der Steckriegel 122 kann demnach vom Zylinderschloß 160 vollständig unabhängig verdreht werden, so daß ein gewaltsames Abscheren der Zuhaltestifte von vorneherein ausgeschlossen ist. In einer anderen, nicht dargestellten, baulich besonders einfachen Ausführungsform ist der Steckriegel 122 starr am Gehäuse 140 befestigt. Alternativ hierzu kann auch eine Befestigungsart gewählt werden mit einer den Schließzylinder mit dem Steckriegel verbindenden, eine Rutschkupplung darstellenden Verbindungshülse.

-18-

Das Schloßgehäuse 140 kann aus einem Dreh- oder Gußteil bestehen; es kommt jedoch auch ein lamellenartiger Aufbau gemäß Fig. 6 bis 8 in Frage. Das Schloßgehäuse 140 besteht also aus einer Vielzahl von Schloßplatten 141, welche aneinandergelegt und miteinander starr verbunden werden, insbesondere durch in den Fig. 4 und 6 angedeutete durchgehende Nietbolzen 143. Die am schlüsselseitigen Ende gelegene Schloßplatte 141a hat kreisförmigen Umriß (siehe Fig. 4) und ist        mit drei auf den Umfang verteilten Bolzenöffnungen 144 für die Nietbolzen sowie einer zentralen Öffnung 145 für das äußere Schließzylinderende versehen. Es folgen eine Reihe von Schloßplatten 141b, von denen eine in Fig. 8 abgebildet ist. Diese Schloßplatten weisen neben den Nietbolzenöffnungen 144 eine durchmesservergrößerte zentrale Öffnung 147 auf, die der Aufnahme des Zylinderschloßgehäuses 162 dient; dementsprechend ist zur Aufnahme des Keils 162a des Schließzylindergehäuses 162 eine entsprechende rechteckige Aussparung 168 in der Platte 141b vorgesehen, die in die Öffnung 147 radial mündet. An der in Fig. 8 linken Seite der Schloßplatte 141b sind im oberen und unteren Bereich zwei hakenartige, aufeinanderzu laufende Vorsprünge 149, 148 vorgesehen, welche zwischen sich eine T-förmig hinterschnittene Nut 151 definieren. Diese Nut 151 dient, wie noch anhand von Fig. 4 erläutert werden wird, der Aufnahme der entsprechenden, einander gegenüberliegenden Ränder des Schloßhalters 116. Sämtliche auf die kreisförmige Schloßplatte 141a folgenden Schloßplatten haben gleichen Außenumriß, wobei sie, aneinandergelegt, die zur Riegelachse 130 parallel verlaufende Nut 151 bilden. Lediglich die im Bereich des radialen Sperriegels 174 befindlichen Schloßplatten 141c weisen einen zur Nut 151 und zur zentralen Öffnung 147 offenen Durchgang 153 auf, in welchem der Stift 174 zwischen seiner in Fig. 7 strichliert angedeuteten Freigabestellung 174' in Richtung des Pfeils S in seine punktiert angedeutete Sperrstellung 174" und zurückschwenken kann.

Gemäß Fig. 5 wird zum Absperren des Zweirads das Schloßgehäuse 140 in einer strichliert angedeuteten Lage 140' mit dem Sperriegel 122 voraus in horizontaler Richtung (Richtungspfeil H) zum Schloßhalter 116 hin bewegt, wobei der Sperriegel 122 zunehmend in den Bereich zwischen die Zweiradspeichen gelangt und sich einem ggf. vorhandenen Gegenlager (Fig. 3) nähert. Schließlich fädelt der Schloßhalter 116 in die Nut 151 ein, wobei der obere und untere Umfangsrandabschnitt 155a bzw. 155b in die von den Vorsprüngen 149 bzw. 148 gebildeten Hinterschneidungen 157a bzw. 157b eingreift. Die Tiefe und Breite der Hinterschneidungen 157a und 157b sind an die entsprechenden Abmessungen der Umfangsrandabschnitte 155a, 155b angepaßt, so daß man eine mechanisch stabile Nut-Feder-Verbindung mit geringem Spiel erhält. Am Ende der Vorschubbewegung in Richtung des Pfeils H schlägt die kreisrunde Schloßplatte 141a an den in Fig. 5 linken Vertikalrand 159 der Schloßplatte 116 an. Nunmehr kann das Zylinderschloß 116 abgesperrt werden, indem der Schließzylinder 170 mit Hilfe des Schlüssels 128 in seine Sperrstellung verdreht wird, wobei der radiale Stift 174 seine in den Fig. 4, 5 und 7 punktiert angedeutete Sperrstellung 174" einnimmt. In dieser Sperrstellung liegt der Stift 174 seitlich am Umfangsrand 117c an und zwar am in Fig. 5 rechten Vertikalrand 161. Somit ist der Umfangsrand 117c in horizontaler Richtung beidseits relativ zum Schloßgehäuse 140 festgelegt, nämlich einerseits durch die kreisrunde Schloßplatte 141a, da deren Umfangsbereich gemäß Fig. 4 weit in die Nut 151 hinein reicht, und andererseits durch den erwähnten Radialstift 174 in dessen Sperrstellung 174".

Zum Entsperren geht man in umgekehrter Bewegungsreihenfolge vor. In der Fahrtstellung des Zweirads kann man die Einheit Schloßteil 120-Steckriegel 122 gesondert vom Schloßhalter 116 aufbewahren. Der freiliegende Schloßhalter 116 bietet ein angenehmes Äußeres und steht nur gering vom Rahmenteil 112a ab, was die Gefahr eines Hängenbleibens, z.B.
von Kleidungsstücken, verringert. Man kann jedoch ebensogut das Schloßteil 120 samt Steckbügel 122 auf den Schloßhalter 116 stecken, wobei das Schloßteil 120 lediglich um die
in Fig. 4 angedeutete Körperachse 132 um 90° im Uhrzeigersinn der Fig.5 zu drehen ist; diese Achse 132 steht senkrecht sowohl zur Steckriegellängsachse 130 als auch zur
Abstandslinie zwischen den die Nut 151 bildenden Vorsprüngen
149, 148.

In Fig. 5 ist mit strichpunktierter Umrißlinie die Position 140'' des Schloßgehäuses 140 angedeutet, die
dieses einnimmt, wenn das Schloßteil 120 samt Steckriegel
122 mit dem Steckriegel 122 nach unten gerichtet in einer
Fahrtstellung entsprechend Fig. 5 auf den Schloßhalter 116
gesteckt werden soll. Man erkennt, daß nunmehr die vertikal
verlaufenden Abschnitte 155c und 155d in die Hinterschneidungen 157a bzw. 157b gelangen. In der Endstellung,
in der die kreisrunde Schloßplatte 141a an den in Fig.5
oberen Querrand des Schloßhalters 116 anschlägt, kann der
radiale Stift 174 wiederum in seine Sperrstellung 174'
verdreht werden, die in Fig. 5 ebenfalls mit strichpunktierter Linie angedeutet ist. In dieser Stellung liegt der Stift
174 am unteren Querrand des Halters 116 an.

In Fig. 9 ist eine weitere Ausführungsform des Steckriegelschlosses angedeutet, wobei lediglich der modifizierte Halter 216 dargestellt ist, der sich vom Halter 116 gemäß Fig.
5 darin unterscheidet, daß in die Umfangsrandabschnitte
255 Eingriffsausnehmungen 281 eingeschnitten sind und zwar
in den in Fig. 9 unteren Umfangsrandabschnitt 255b und in
den rechten vertikalen Umfangsrandabschnitt 255c. Diese Eingriffsausnehmungen 281 dienen der Aufnahme entweder eines
radialen Stiftes, dem Stift 174 entsprechend, oder der Aufnahme eines in Fig. 9 punktiert angedeuteten Exzenterabschnitts 272. In der Absperrstellung mit horizontal verlaufendem Sperrriegel nimmt der Exzenterabschnitt die in Fig. 9 mit 272" bezeichnete Lage ein und in der Fahrtstellung mit vertikal nach unten vom Schloßteil ablaufendem Steckriegel die mit 272' bezeichnete Stellung. Man erkennt, daß in beiden Fällen der in die jeweiligen Eingriffsausnehmung eingepaßte Exzenterabschnitt dafür sorgt, daß das Schloßgehäuse starr am Schloßhalter 216 festgelegt ist, so daß in diesem Falle ein Anschlag entfallen kann, wie er in der Ausführungsform gemäß Fig.4 bis 8 durch die kreisrunde Schloßplatte 141a gebildet ist.

Das im folgenden zu beschreibende Schloßteil 320 ist gleichermaßen wie das Schloßteil 110 gemäß Fig. 4 bis 8 zum Aufstecken auf den plattenförmigen Schloßhalter 116 mit quadratischem Umriß bestimmt. In den Fig. 10 und 13 ist mit einer Strich-Punkt-Punkt-Linie der Umriß eines derartigen Schloßhalters 116 angedeutet.

Der prinzipielle Aufbau des Schloßhalters 310 geht aus den Fig. 10 und 11 hervor. Er besteht aus einem Schloßgehäuse 340 mit eingelegtem Zylinderschloß 360 aus Schließzylindergehäuse 362 und Schließzylinder 370, einem am Schloßgehäuse 340 frei um seine Längsachse 330 drehbar gelagerten Steckriegel 322, einer Exzenterscheibe 374 (siehe auch Fig. 14) sowie einer Vorspannfeder 400. Ein Schlüssel 328 ist zur Betätigung des Zylinderschlosses 360 vorgesehen.

Das Schloßgehäuse 340 ist in den Fig. 12 und 13 näher dargestellt unter Weglassung sonstiger Bauteile (außer der Exzenterscheibe 374 in Fig. 13). Das Gehäuse 340 besteht aus zwei schubladenartig in Richtung der Achse 330 ineinander gesteckten Gehäuseteilen, einem ersten Gehäuseteil 402 und einem zweiten Gehäuseteil 404. Das erste Gehäuseteil 402 besteht aus einem Blechprägeteil, welches im wesentlichen L-förmig abgeknickt ist. Der eine Schenkel ·der L-Form bildet einen der beiden zur Achse 330 senkrechten Stirnwände des Gehäuses 340 nämlich die vom Riegel 322 durchsetzte Stirnwand 402a. Wie Fig. 10 zeigt, durchsetzt ein durchmesserverringerter axialer Fortsatz 322a eine entsprechende Lageröffnung 402b der Stirnwand 402a; ein sich anschließender durchmesservergrößerter Kopf 322b legt den Riegel 322 innerhalb der Lageröffnung 402b in axialer Richtung fest. Dieser Kopf kann beispielsweise durch entsprechende Stauchung des Riegels 322 in diesem Bereich hergestellt werden. Darüber hinaus kann ein durchmesserverringerter in Fig. 11 strichliert angedeuteter Lagerzapfen 406 in axialer Richtung vom Kopf 322b abstehen, welcher gemäß Fig. 14 in eine entsprechende zentrale Führungsöffnung 408 der Exzenterscheibe 374 eingreift und auf diese Weise für eine lagengenaue Drehlagerung der Exzenterscheibe 374 innerhalb des Gehäuses 340 sorgt.

Das von der in Fig. 10 oben gelegenen Knickkante der L-Form entfernte untere Rand der Stirnwand 402a ist rechtwinklig in Richtung weg vom freien Ende des Riegels 322 umgebogen (umgebogener Randabschnitt 410), um die Stabilität des Gehäuses 340 zu vergrößern, insbesondere um eine solide Punktschweißverbindung (Schweißpunkte 412 in Fig. 12) in diesem Bereich zwischen den beiden Gehäuseteilen 402 und 404 sicherzustellen.

Der andere Schenkel der L-Form des ersten Gehäuseteils 402 bildet die dem Schloßhalter 116 zugewandte Anlage-Seitenwand 414. Die zur Achse 330 parallelen Längsränder der Anlage-Seitenwand 414 sind nach außen hin (bezogen auf das Gehäuseinnere) rechtwinklig umgebogen unter Bildung von Randstreifen 416. Der lichte Abstand g zwischen den Randstreifen 416 ist geringfügig größer als die Quadrat-Seitenlänge a des Schloßhalters 116. Randstreifen 416 stehen mit einer Länge h über die Anlage-Seitenwand 414 vor, welche geringfügig größer ist als die Plattenranddicke i (siehe Fig. 4) des Schloßhalters 116. Das zweite Gehäuseteil 404 umgreift gemäß Fig. 12 mit zur Achse 330 parallelen Randstreifen 420 die Randstreifen 416 des ersten Gehäuseteils 402. Die Randstreifen 420 liegen in einer zur Oberseite 422 der Anlage-Seitenwand 414 parallelen Ebene, wobei sie an den zur Oberseite 422 parallelen Endflächen der Randstreifen 416 anliegen und dabei über diese Randstreifen in Richtung zum anderen Randstreifen vorkragen. Auf diese Weise wird eine T-förmig hinterschnittene Nut 351 entsprechend der Nut 151 in den Fig. 4 und 8 festgelegt; diese Nut ist zum einen durch die Oberseite 422 der Anlage-Seitenwand 414 definiert und zum anderen durch die einander zugewandten Innenseiten 424 der Randstreifen 416 sowie durch die der Oberseite 422 gegenüberliegenden Unterseitenabschnitte 426 der Randstreifen 420.

Um Klappergeräusche bei am Schloßhalter 116 angebrachtem Schloßgehäuse 340 selbst bei größeren Fertigungs-Maßabweichungen zuverlässig zu verhindern, wird das in Fig. 13 oben gelegene Vorlaufende 116a (Vorlaufende im Sinne einer Einschiebebewegung in Fig. 13 von unten nach oben in die beschriebene Nut 351) keilartig im Gehäuse 340 festgelegt. Zur Fixierung des Vorlaufendes 116a in Richtung seines vorderen Querrandes 117 sind die beiden in Fig. 13 oberen Enden 419a der Randstreifen 416 aufeinanderzu umgebogen.

Um das Vorlaufende 116a auch in Richtung senkrecht zur Oberseite 422 der Anlage-Seitenwand 414 innerhalb des Gehäuses 340 festzulegen, sind in diesem Bereich zwei keilähnliche Präge-Vorsprünge 432 aus der Seitenwand 414 ausgeformt. Diese beiden Präge-Vorsprünge befinden sich also am in Fig. 13 oben gelegenen Ende der Seitenwand 414 und nehmen in ihrer Höhe zum Rand der Wand hin zu (siehe auch Fig. 10). Schiebt man also den Schloßhalter 116 zunehmend in Fig. 13 nach oben und in Fig. 10 nach links (Richtungspfeil B), so wird das Vorlaufende 116a zunehmend von den Vorsprüngen 432 an die Unterseite 426 der Randstreifen 420 hingedrückt.

Zum Aufbau des zweiten Gehäuseteils 404 ist noch nachzutragen, daß dieses neben der die Randstreifen 420 aufweisenden, das Gehäuse in Umfangsrichtung (bezogen auf die Achse 330) abschließenden Seitenwand 440 noch eine die schlüsselseitige Stirnwand 442 bildende Wand aufweist. Die Wand 442 weist dementsprechend eine Durchtrittsöffnung 444 für den Zylinderkern 370 des Zylinderschlosses 360 auf. Die Wand 442 reicht bis an die Unterseite 426 der Randstreifen 420.

Die Seitenwand 440 des zweiten Wandteils 404 ist mit geprägten Versteifungsrippen 445 versehen ebenso wie die Randstreifen 416 (Rippen 446).

Die Form der Exzenterscheibe geht aus Fig. 14 hervor. In ihrer Schließstellung ragt ihr Exzentervorsprung 448 über die Oberseite 422 der Anlage-Seitenwand 414 hinaus. Der Exzentervorsprung 448 ist mit einer Nase 450 ausgebildet, welche in axialer Richtung zum schlüsselseitigen Gehäuseende hin vorspringt und mit einer Andrückfläche 452 versehen ist. Die Fläche 452 ist nach Fig. 10 und 11 radial nach außen und in Richtung zum freien Riegelende hin abgeschrägt. Die Federn 400 gemäß Fig. 10 (bzw. die einfacher geformte Schraubendruckfeder 400' gemäß Fig. 11) stützt sich an der Innenseite der Stirnwand 402 ab und übt auf die Exzenterscheibe 374 aufgrund ihrer Vorspannung eine in Richtung zum schlüsselnäheren Gehäuseende gerichtete axiale Kraft aus. Die untere Querkante 454 des Nachlaufendes des Schloßhalters 116 wird demzufolge von deren abgeschrägter Nase 450 sowohl in Richtung B als auch radial nach außen (Richtung C) gedrückt. Die letztere Bewegung entspricht einer Schwenkbewegung des Schloßträgers 116 relativ zum Schloßgehäuse 440 um eine durch die Vorsprünge 432 definierte Schwenkachse. Die abgeschrägte Nase 450 drückt folglich das Vorlaufende 116a in die keiligen Abschrägungen (einwärtsgebogene Enden 419, keilige Vorsprünge 432); gleichzeitig drückt die Nase 450 das Nachlaufende in Richtung C, also zur Anlage an der Unterseite 442 der Randstreifen 420 in diesem Bereich.

Die Dreh-Kopplung der Exzenterscheibe 374 mit dem Schließzylinder 370 erfolgt über axiale, teilzylinderförmige Mitnahmevorsprünge 458 am schlüsselferneren Zylinderende, welche in komplementär geformte Ausnehmungen 460 der Exzenterscheibe 374 eingreifen. Beim Zusammenbau ist also die Exzenterscheibe 374 lediglich in axialer Richtung auf diese Vorsprünge 458 aufzuschieben.

Die in Fig. 13 dargestellte Drehstellung der Exzenterscheibe 374 (entsprechend der Orientierung in Fig. 14) entspricht der Schließstellung mit Festlegung des Schloßhalters innerhalb der Nut 351 des Gehäuses 340. Zum Lösen des Schloßgehäuses 340 vom Schloßhalter 116 ist mit Hilfe eines eingesteckten passenden Schlüssels 328 die Exzenterscheibe 374 in eine Freigabestellung zu verdrehen, in welcher die Scheibe 374 nicht mehr über die Oberseite 422 der Seitenwand 414 vorsteht. Im dargestellten Ausführungsbeispiel (Fig. 13 und 14) geschieht dies durch Verdrehen der Scheibe 374 im Uhrzeigersinn der Fig. 14 (Bewegungspfeil C, entsprechend einer Bewegung der Nase 450 in Fig. 13 nach rechts). Man erkennt, daß nach einer kurzen Schwenkbewegung die vorlaufende Seitenflanke der Nase 450 an einen Eckvorsprung 464 einer entsprechenden Exzenterscheibenausnehmung 466 der Seitenwand 414 anschlägt. Dies gibt einen fühlbaren Druckpunkt bei Aufschließen des Schlosses, welcher jedoch aufgrund einer in Fig. 14 erkennbaren Abwinkelung 468 der Exzenterscheibe 374 im Bereich der Nase 450 leicht überwunden wird. An den Eckvorsprung 464 schließt sich nach unten ein Vorsprungslappen 470 an, welcher eine Verlängerung des

Eckvorsprungs 464 nach unten hin entspricht. Nach erfolgter Verdrehung der Scheibe 374 in der Freigabestellung kann das Gehäuse 340 vom Gehäusehalter 116 abgezogen werden. Ein versehentliches Zurückschwenken der Exzenterscheibe 374 in die Schließstellung verhindert nun der Vorsprungslappen 470, da nach kurzer anfänglicher Schwenkbewegung die Nase 450 unter der Kraft der Feder 400 an den Vorsprungslappen 470 anschlägt und somit eine weitere Schwenkbewegung verhindert. Der Vorsprungslappen 470 ist jedoch derart abgeschrägt, daß eine wesentliche Überwindung des Druckpunkts ohne größere Kraftanstrengung möglich ist.

Die Fig. 15 bis 17 zeigen den Aufbau eines Gegenlagers 518, welches im Gegensatz zum Gegenlager 118 gemäß Fig. 3 zweiteilig ist. Der Umriß des eingesteckten Steckriegels 122 ist in den Figuren mit einer Strich-Punkt-Punkt-Linie angedeutet. Der Umriß des Fahrradrahmenteils 112b ist strichliert angedeutet. Das Gegenlager besteht aus einem Grundkörper 520 und einer Kappe 522. Die Kappe 522 ist in Fig. 16 zur Vereinfachung der Darstellung lediglich strichliert angedeutet.

Der Grundkörper 520 wird von einem im wesentlichen U-förmig geprägten Blechteil gebildet, wobei der Mittelschenkel 524 der U-Form am Rahmenteil 112 angebracht ist, sei es durch Verschweißung oder mit Hilfe einer nachträglich am Fahrradrahmen anbringbaren Rohrbefestigung gemäß Fig. 18 und 19. Die in den Fig. 15 bis 17 dargestellte, für das Verschweißen bestimmte Ausführungsform des Grundkörpers 520 ist mit zwei zum Rahmenteil 112b hin vorstehenden, geprägten Schweißrippen 526 versehen, welche das Punktverschweißen erleichtern.

Die Kappe 522 umschließt das Gegenlager 518 bis auf den Mittelschenkel 524. Die Seitenschenkel 530 und 532 der U-Form des Grundkörpers 520 werden also von der Kappe 522 abgedeckt.

Die Kappe 522 ist mit dem schrägen Grundkörper 520 verrastet und zwar mittels zweier seitlicher Rastvorsprünge 536 und einem rückwärtigen Rastvorsprung 538. Der rückwärtige Rastvorsprung 538 greift in einen Längsschlitz 540 am rückwärtigen, d.h. vom zugeordneten Schloßhalter 116 entfernteren Gehäuseende ein. Dieses Gehäuseende ist vollständig geschlossen, wohingegen das vordere Gehäuseende mit der Eintrittsöffnung 544 für den Steckriegel 122 versehen ist. Hierzu ist sowohl der vordere Seitenschenkel 532 als auch die an diesen Seitenschenkel anliegende Kappenwand 542 mit einer kreisrunden Durchgangsöffnung 544 bzw. 546 ausgebildet. Um das Einführen des Steckriegels 122 zu erleichtern, ist die Öffnung 546 der Wand 542 von einem innen konisch abgeschrägten Einweis-Ring 548 umgeben.

Die beiden seitlichen Rastvorsprünge 536 greifen jeweils unter einen Randlappen 550, welche an den beiden zur Ebene des Mittelschenkels 524 im wesentlichen senkrechten Seitenrändern des vorderen Seitenschenkels 532 vorgesehen sind und in Richtung zum anderen Seitenschenkel 530 hin sich erstrecken. Die durch die Rastvorsprünge 536 gebildete Rastverbindung gerät daher nicht in räumlichen Konflikt mit den Öffnungen 546, 544 in der Kappenwand 542 bzw. dem Seitenschenkel 532.

Um das Zusammenstecken zu erleichtern, ist der hintere Seitenschenkel 530 an seinem freien Ende mit einem zum anderen Schenkel hin vorspringenden Prägevorsprung 556 versehen, welcher oberhalb des Schlitzes 540 liegt und zum Schlitz 540 hin eine Auflaufschräge 558 für den Rastvorsprung 538 beim Aufsetzen der Kappe 522 auf den Grundkörper 520 bildet.

In den Fig. 15 und 17 sind Versteifungsrippen 560 erkennbar, welche in der oberen Kappenhälfte die Kappenseitenwände 562 mit der Kappendecke 564 verbinden. Die Rippen 560 sind, in axialer Richtung voneinander beabstandet, in zur Achse 130 des eingesteckten Riegels 122 radialen Ebenen angeordnet. Sie sind mit halbkreisförmigen, nach unten offenen Ausnehmungen 540 zur Aufnahme des Steckriegels 122 ausgebildet.

Wie bereits erwähnt, kann das Gegenlager wie auch der Schloßträger unmittelbar am entsprechenden Rahmenteil angeschweißt oder angelötet sein. Die anhand der Fig. 18 bis 21 nachfolgend zu beschreibende Rohrbefestigung ermöglicht ein Nachrüsten. Die Rohrschellen-Befestigung 700 besteht aus einem Abstützteil 702, welches sich mit in Richtung der Rohrachse 704 voneinander beabstandeten Stützen 706 am Rohrumfang abstützt, einer zwischen den Stützen 706, 708 angeordneten Zugplatte 710 mit Schrauben-Innengewinde 712, einer in das Innengewinde 712 eingeschraubten Kopfschraube 714 sowie schließlich aus einem das Rohr 716 umgreifenden Bügel 718, dessen Bügelenden 720 die Zugplatte 710 hintergreifen.

Die Bügelenden 720 umgreifen die zur Rohrachse 704 parallelen Längsränder 722 der Zugplatte 710. Sie liegen an der vom Rohr 716 abgelegenen Rückseite 724 der Zugplatte 710 flächig an. Dies geht auch aus der Fig. 20 hervor, in welcher im Unterschied zu den Fig. 18 und 19 ein Schloßhalter 116' ähnlich dem Schloßhalter 116 gemäß Fig. 4 und 5 am Rohr 716 mit Hilfe der Rohrschellenbefestigung 700 angebracht ist.

Die Form des Abstützelements geht aus den Fig. 18 bis 20 hervor. Es ist folglich angenähert topfartig geprägt mit einer entlang dreier Umfangsseiten verlaufenden Seitenwand 730, welche die Stütze 708 bildet, und einem gesonderten, die Stütze 706 bildenden Lappen. Der Lappen sowie die Seitenwand 730 gehen von einer Grundplatte 732 aus, an deren Oberseite 734 das jeweils am Rohr 716 anzubringende Teil, nämlich der Grundkörper 520 (Fig. 18 und 19) bzw. der Schloßträger 116" (Fig. 20 und 21) aufzusetzen ist. Zwischen den zur Grundplatte 732 senkrechten Längsrändern 735 der Stütze 706 und der Seitenwand 730 ist folglich ein freier Raum, welcher bei der Montage das Einschieben der Bügelenden 720 zur Anlage an der Rückseite 724 der Zugplatte 710 auch bei relativ weit eingeschraubter Kopfschraube 714 und damit entsprechend geringem lichtem Abstand zwischen Grundplatte 732 und Zugplatte 710 erlaubt.

Die parallel zur Rohrachse 704 verlaufenden Abschnitte 736 der dreiseitig umlaufenden Seitenwand 730 enden in einer Höhe, welcher der Achse 704 näher liegt, als die Rückseite 724 der Zugplatte 710; sie liegen an der Außenseite des Bügels 718 an, welcher in diesem Bereich abgeflacht ist und angenähert parallel zur Ebene des jeweiligen Wandabschnitts 736 verläuft. Die Bügelenden 720 sind demzufolge nach außen hin von den Randabschnitten 736 abgedeckt. In einem relativ weiten Verstellbereich liegen die Randabschnitte 736 spaltfrei an der Außenseite des Bügels 718, was ein gewaltsames Aufbrechen der Rohrschellenbefestigung 710 stark erschwert.

Das Einschieben der Bügelenden 720 bei der Montage wird auch dadurch erleichtert, daß die Zugplatte 710 im Bereich der Stütze 706 mit in Richtung zur Rohrachse 704 umgebogenen Ausklinklappen 740 versehen ist, welche Auflaufschrägflächen 742 für die einzufädelnden Bügelenden 720 bilden (siehe Fig. 20).

Das jeweils zu befestigende Teil, nämlich der Grundkörper 520 bzw. der Schloßhalter 116", sind jeweils mit einer Durchtrittsöffnung 744 bzw. 745 für den Schaft 746 der Kopfschraube 714 versehen. Zur Montage wird als erstes die-

se Öffnung mit einer entsprechenden Öffnung 748 des Abstütz-teils 702 zur Deckung gebracht, sodann in die Kopfschraube 714 hindurchgeschoben und lose in das Innengewinde 712 der Zugplatte 710 eingeschraubt. Die Schelle 718 wird gesondert über das Rohr 716 gelegt und anschließend das in der beschriebenen Weise vormontierte Teil an den Rohrumfang mit den Stützen 706, 708 angesetzt. Nun wird der Bügel 718 in axialer Richtung gegenüber dem vormontierten Teil verschoben unter Einfädeln der Bügelenden 720 beidseits der Stütze 706 und hinter die Zugplatte 710. Ggf. muß die Kopfschraube 714 etwas zurückgedreht werden, um die Zugplatte 710 näher an die Rohrachse 704 zu bringen. Sobald sich der Bügel 718 zwischen den Stützen 706 und 708 gemäß Fig. 20 befindet, kann die Kopfschraube 714 angezogen werden.

Bei aufgesetztem Schloßteil 320 bzw. aufgesteckter Kappe 522 ist der Kopf der Kopfschraube 714 jeweils unzugänglich, so daß die Gefahr einer unbefugten Demontage gering ist.

In den Fig. 22 und 23 ist eine weitere Art der Befestigung eines Schloßhalters 815 an einem Zweiradrahmenrohr 817 dargestellt. Der Schloßhalter 815 besteht aus einem quadratischen, im wesentlichen ebenen Plättchen mit einer zentralen eingesenkten Durchgangsöffnung 819 zur Aufnahme eines Kopfes 822 einer Senkkopfschraube 824. Das Plättchen hat quadratischen Umriß mit abgerundeten Ecken. Es besteht aus rostfreiem Material, wie z.B. Edelstahl, so daß ein Lackieren nicht erforderlich ist. Ein Anschweißteil 826 ist von vorneherein bei der Herstellung des Zweirades am Rohr 817 fest-geschweißt; die in Fig. 22 angedeutete Schweißwülste 828 erleichtern die Punktverschweißung. Das Anschweißteil 826 wird zusammen mit dem Zweiradrahmen lackiert. Um anschliessend den Schloßhalter 815 befestigen zu können, ist das Anschweißteil mit einer Innengewindebohrung 830 versehen, in welche die erwähnte Senkkopfschraube 824 einschraubbar ist. Ggf. kann eine gewindeschneidende Senkkopfschraube verwendet werden, welche zum einen etwaige Lackreste des Innengewindes beseitigt und zum anderen ein unbefugtes Herausdrehen der Senkkopfschraube 824 wesentlich erschwert.

Zur Drehsicherung ist das Anschweißteil 826 an zwei aneinander gegenüberliegenden Ecken mit Ausnehmungen 834 versehen, in welche dementsprechend ausgebildete Vorsprünge 836 an der dem Rohr 817 zugewandten Unterseite 838 des Schloßträgers 815 eingreifen. Die Vorsprünge 836 können durch entsprechendes Prägen erhalten werden.

Die Rohrschellen-Befestigung 700 gemäß den Fig. 18 - 21 ist in gleicher Orientierung wie das jeweilige Rohr an diesem angebracht. Die jeweilige Rohrachse 704 (Fig. 18 und 19) bzw. 704' (Fig. 20 und 21) verläuft also parallel zu der Mittelgeraden 760 des Abstützteils 702. Diese Mittelgerade 760 liegt in der Ebene der Zugplatte 710, schneidet die Achse 762 der Kopfschraube 714 und steht senkrecht zur Lappenebene der Stütze 706 und zum gegenüberliegenden Wandabschnitt der Seitenwand 730. Die Mittelgerade 760 verläuft somit parallel zu den einander gegenüberliegenden Seitenrändern der quadratischen Umrißform des Abstützteils 702 (s.Fig. 19). Die Stütze 708 liegt mit einer teilkreisförmigen Mulde 764 am Rohraußenumfang an und dementsprechend der gegenüberliegende Wandabschnitt der Seitenwand 730 mit einer Mulde 766 (Fig. 19). Die beiden Mulden 764 und 766 fluchten miteinander in Richtung der Mittelgeraden 760; die Fluchtlinie der beiden Mulden, die als Verbindungsgerade der Muldenkreis-Mittelpunkte definiert werden können, verläuft also parallel zur Mittelgeraden 760.

Bei einer Radgabel gemäß Fig. 1 - 3 sind die beiden Rahmenteile 112a und 112b, welche den Schloßhalter 116 bzw. das Gegenlager 118 tragen, nicht zueinander parallel, sondern zu einander geneigt. Die horizontale Achse 130 des Steckriegels 122 bei in Absperrstellung befindlichem Schloß verläuft weder senkrecht zur Achse des Rahmenteils 112a noch senkrecht zur Achse des Rahmenteils 112b. Der Schloßhalter 116 sowie das Gegenlager 518, welche entsprechend der Orientierung der Riegelachse 130 am Fahrradrahmen anzubringen sind, sind also dementsprechend geringfügig verdreht am Abstützteil 702 zu befestigen. Die zur Achse 130 des eingesteckten horizontalen Steckriegels 122 senkrechte, durch die Kopfschraubenachse 762 gehende Quer-Mittellinie 770 des Grundkörpers 520 des Gegenlagers 518 schließt also einen Winkel α' mit der Linie 760 des Abstützteils 702 ein, welcher der Neigung der Rohrachse 704 gegenüber der Vertikalen entspricht. Dementsprechend schließt die vertikal verlaufende Quer-Mittellinie 772 des Schloßhalters 116'' in Fig. 21 einen Winkel β'mit der Mittellinie 760 ein, wobei β' im allgemeinen betragsgleich mit α' ist. Bei der Montage von Schloßhalter 116'' und Gegenlager 518 ist auf die Einhaltung der Winkel α' und β'zu achten.

Dies erübrigt sich bei der in Fig. 24 gezeigten Ausführungsform 800 einer Rohrschellen-Befestigung. Bauelemente in Fig. 24, welche Bauelementen in den Fig. 18 - 21 ihrer Funktion nach entsprechen, sind mit denselben Bezugsziffern, jeweils vermehrt um die Zahl 100 versehen.

Die Rohrschellen-Befestigung 800 trägt einen Schloßhalter 116'' entsprechend der Rohrschellen-Befestigung gemäß Fig. 20 und 21. Zur Verdeutlichung des Aufbaus ist der Schloßhalter 116'' bis auf sein linkes unteres Eck weggebrochen. Das demzufolge teilweise sichtbare Abstützteil 802 ist ebenfalls teilweise weggebrochen, nämlich in Fig. 24 rechts Mitte und links oben. Die Zugplatte 810 ist demzufolge teilweise erkennbar, ebenso wie einer der beiden die Zugplatte 810 hintergreifenden Bügelenden 820. Die Kopfschraube ist weggelassen. Man erkennt jedoch die entsprechende

Öffnung 848 sowie ein Innengewinde 812 der Zugplatte 810. die Schelle 818 umgreift entsprechend der Rohrschellen-Befestigung 700 gemäß Fig. 18 - 21 das Rohr 816. Das Abstützteil 802 stützt sich an seinem in Fig. 24 oberen Ende mit einer Stütze 808 mit teilkreisförmiger Mulde 864 am Rohraußenumfang ab. Eine zweite Stütze 880 mit einer dementsprechend teilkreisförmigen Mulde 882 (in Fig. 24 unten) der Zuplatte 810 liegt ebenfalls am Rohraußenumfang an. Die Stütze 880 ersetzt den entsprechenden Wandabschnitt (Stütze 708) der entlang dreier Umfangsseiten verlaufenden Seitenwand 730, beispielsweise gemäß Fig. 19.

Im Gegensatz zu den Fig. 19 und 21 ist das Abstützteil 802 gleich orientiert wie das daran anzubringende Teil, hier der Schloßträger 116''. Die oberen und unteren Ränder verlaufen also horizontal und die beiden Seitenränder vertikal. Dies wird durch entsprechende seitliche Versetzung der beiden Stützen 808 und 880, genauer gesagt der beiden Mulden 864 und 882, erreicht. Die zur Rohrachse 804 parallele, ggf. mit dieser zusammenfallende Fluchtlinie 884 der beiden Mulden 864 und 882 schließt folglich den Winkel $\beta'$ mit der vertikal verlaufenden Mittelgeraden 872 des Abstützteils 802 ein. Die ist auch der Grund, warum die beiden Wandabschnitte 736 (Fig. 18) hier entfallen, da diese schräg zu den Bügelenden 720 verlaufen würden und ggf. mit diesen kollidieren würden.

Der Schloßhalter 116'' wird in gleicher Orientierung wie das Abstützteil 802 montiert. Um zwangsläufig diese Gleichorientierung zu erhalten, können außerhalb der Kopfschraubenachse liegende Vorsprünge an einem der beiden Teile Schloßhalter 116'' und Abstützteil 802 sowie dementsprechende Ausnehmungen am jeweils anderen Teil vorgesehen sein, die auch für eine Drehsicherung sorgen (ähnlich den Vorsprüngen 836 und Ausnehmungen 834 gemäß Fig. 22 und 23).

Das in den Fig. 10 - 14 dargestellte Steckriegelschloß mit Schloßteil 320 kann mit einer Schlüsselloch-Abdeckung in Form eines im wesentlichen U-förmigen Schwenkteils 900 versehen sein, welches in Fig. 10 mit einer Strich-Punkt-Linie angedeutet und in den Fig. 25 - 27 in mehreren Ansichten dargestellt ist. Das Schwenkteil 900 ist am Gehäuse 340 schwenkbar gelagert um eine zur Riegelachse 330 und damit zur Schlüssel-Einführrichtung parallele Schwenkachse 902. Diese Schwenkachse wird jeweils von einem Schwenkgelenk zwischen dem Gehäuse 340 und den beiden Seitenschenkeln der U-Form des Schwenkteils 900 gebildet. Die beiden Seitenschenkel liegen jeweils in einer zur Riegelachse 330 senkrechten Ebene und schwenken aufgrund der beschriebenen Orientierung der Schwenkachse in diesen jeweiligen Ebenen entlang jeweils einer der beiden zur Achse 330 senkrechten Stirnseiten des Gehäuses 340. Der in den Fig. 10 und 25 linke Seitenschenkel 910 bewegt sich also entlang der das Schlüsselloch aufweisenden Gehäuseseite 912 und der andere Seitenschenkel 914 dementsprechend an der gegenüberliegenden Gehäuseseite 916, von welcher der Steckriegel 322 absteht. Der dementsprechend in Richtung parallel zur Achse 330 verlaufende Mittelschenkel 918 der U-Form des Schwenkteils 900 liegt in der in den Fig. 26 und 27 mit durchgezogener Umrißlinie dargestellten Schlüsselloch-Abdeckstellung angenähert flächig am Gehäuse 340 an, und zwar an dem der Anlageseitenwand 414 gegenüberliegenden, zu dieser parallelen Wandabschnitt 920 des zweiten Gehäuseteils 404. Die zur Achse 330 senkrechte Breite d des Mittelschenkels 918 entspricht der Breite des Wandabschnitts 920 (Fig. 12 und 26).

Die Form der beiden Seitenschenkel 914 und 910 geht aus den Fig. 26 und 27 hervor. Der steckriegelseitige Seitenschenkel 914 hat angenähert V-Form um im Bereich der Beuge der V-Form eine Steckriegel-Ausnehmung 921 auszubilden, welche den Steckriegel 322 in der Schlüsselloch-Abdeckstellung aufnimmt. Der eine Schenkel der V-Form verläuft im wesentlichen parallel zur Breite des Mittelschenkels 918; der andere Schenkel der V-Form erstreckt sich in Fig. 26 nach links oben in Richtung zum Randstreifen 420 in gleicher Orientierung wie der den Wandabschnitt 920 mit dem Randabschnitt 420 verbindende Wandabschnitt 924. In der Schlüsselloch-Abdeckstellung schließ der Seitenschenkel 914 angenähert bündig mit dem Gehäuse ab.

Im Bereich des freien Ende des vom Mittelschenkel 918 wegstrebenden Schenkels 926 der L-Form des Seitenschenkels 914 steht ein stiftartiger Lagervorsprung 930 in Richtung parallel zur Achse 330 zum anderen Seitenschenkel 914 hin vor, welcher in eine angepaßte Lagerausnehmung 928 in der Stirnwand 402a eingreift. Der Vorsprung 930 bildet das Schwenkgelenk dieses Seitenschenkels 914.

Am anderen Seitenschenkel 910 ist ein entsprechender Vorsprung 932 ausgeformt, welcher zum Seitenschenkel 910 hin vorspringt und in Richtung parallel zur Achse 330 mit diesem genau fluchtet. Dieser Vorsprung 932 greift in eine entsprechende, in Fig. 12 erkennbare, Lagerausnehmung 934 der schlüsselseitigen Stirnwand 442 des zweiten Gehäuseteils 402 ein. Die beiden Vorsprünge 930 und 932 definieren die bereits erwähnte Schwenkachse 902. Diese ist gegenüber der Riegelachse 330 und damit gegenüber der mit letzterer zusammenfallenden Schlüssel-Einführrichtung versetzt, und zwar in Fig. 27 nach rechts oben.

Im Gegensatz zum Seitenschenkel 914 deckt der Seitenschenkel 910 in der Schlüsselloch-Abdeckstellung angenähert die gesamte Stirnwand 442 ab und damit auch das eigentliche Schlüsselloch 936 einschließlich der Durchtrittsöffnung 444 für den Zylinderkern und ggf. für das

Zylinderschloßgehäuse des Zylinderschlosses 360. Aufgrund dieser vollständigen Abdeckung ist das empfindliche Zylinderschloß gegen Eindringen von Feuchtigkeit und Schmutz weitgehend gesichert.

Um den Zugang zum Schlüsselloch 936 zu ermöglichen, wird das Schwenkteil 900 um seine Achse 902 vom Gehäuse 340 entsprechend weit weg geschwenkt. In der in den Fig. 26 und 27 mit strichlierter Umfangslinie angedeuteten Schlüsselloch-Freigabestellung 900' ist gemäß Fig. 27 das Schlüsselloch 936 frei zugänglich.

Das Schwenkteil 900 kann aus einem durchgehend einstückigen Kunststoffteil bestehen. Es kann in besonders einfacher und schneller Weise dadurch am Gehäuse 340 befestigt werden, daß man die beiden Seitenschenkel 310 und 314 voneinander geringfügig wegbiegt (Pfeil F in Fig. 25) und daraufhin über das Gehäuse 340 stülpt, bis schließlich die Vorsprünge 930 und 932 in die entsprechenden Ausnehmungen 928 und 934 einrasten.

Man kann in nicht dargestellter Weise das Schwenkteil 900 in die Schlüsselloch-Abdeckstellung mittels einer Vorspannfeder oder dergl. vorspannen. In vielen Fällen kann eine derartige Vorspannung entfallen, wenn die beiden Seitenschenkel 910 und 914 unter einer gewissen Vorspannung (entgegengesetzt den Richtungspfeilen F) an den Gehäusestirnseiten anliegen und hierdurch für einen gewissen Reibungskraftschluß sorgen. Dieser Reibungskraftschluß stellt sicher, daß das Schwenkteil 900 die jeweils gewählte Stellung beibehält, bis das Schwenkteil 900 in die jeweils andere Stellung von Hand verschwenkt wird.

PATENTANWÄLTE DIPL.-ING. H. WEICKMANN, DIPL.-PHYS. DR. K. FINCKE
DIPL.-ING. F. A. WEICKMANN, DIPL.-CHEM. B. HUBER
DR.-ING. H. LISKA, Dipl.-Phys. Dr. J. Prechtel

0102621

8000 MÜNCHEN 86
POSTFACH 860 820
MÜHLSTRASSE 22
TELEFON (089) 98 03 52
TELEX 5 22 621
TELEGRAMM PATENTWEICKMANN MÜNCHEN

PRA

Firma Aug. Winkhaus

August-Winkhaus-Straße

4404 Telgte/Westf.

WT 8212.1

## Steckriegelschloß, insbesondere für Zweiradfahrzeuge

### Patentansprüche

1. Steckriegelschloß, insbesondere für Zweiradfahrzeuge, umfassend einen an einem Träger, ggf. an einem Rahmenteil, starr befestigten Schloßhalter und einen mit einem Schloßteil an einem seiner Enden versehenen Steckriegel, wobei ein Schloßgehäuse des Schloßteils wahlweise in einer ersten und einer zweiten Endstellung am Schloßhalter sperrend festlegbar ist, und wobei der Steckriegel in der ersten Endstellung ggf. in Ausnehmungen eines Rades, sperrend eingreift und in der zweiten Endstellung das Rad freigibt, dadurch gekennzeichnet, daß der Schloßhalter (116; 216) im wesentlichen plattenförmig ausgebildet und bevorzugt in einer parallel zu den Riegellängsrichtungen (130) in den beiden Endstellungen verlaufenden Ebene angeordnet ist, und daß das Schloßgehäuse (140; 340) am Schloßhalter (116; 216) in den beiden Endstellungen je über eine Ausnehmung-Vorsprung-Verbindung (151, 155) anbringbar ist.

2. Steckriegelschloß nach Anspruch 1, dadurch gekennzeichnet, daß auf der anderen Seite des Rads (114) dem Schloßhalter (116) gegenüberliegend ein Gegenlager (118) an einem zweiten Rahmenteil (112b) befestigt ist, welches in der ersten Endstellung das andere Ende des Steckriegels (122) aufnimmt.

3. Steckriegelschloß nach Anspruch 2, dadurch gekennzeichnet, daß das Gegenlager (118) eine dem Querschnitt des Steckriegels (122) entsprechende, bevorzugt zylindrische Aufnahmeöffnung (126) für das eine Ende des Steckriegels (122) aufweist.

4. Steckriegelschloß nach einem der vorhergehenden Ansprüche, dadurch gekennzeichnet, daß das Schloßteil (120;320) mit einem verschiebbaren oder verschwenkbaren, in einer Sperrstellung festlegbaren Riegelteil (170) versehen ist, welches mittelbar oder unmittelbar mit wenigstens einem Riegelgegenelement (174), insbesondere Riegelschlitz (281) oder Anschlagskante (117c, 161) des Schloßhalters (116) zusammenwirkt.

5. Steckriegelschloß nach Anspruch 4, dadurch gekennzeichnet, daß das Riegelteil (170) einen Exzenter (374) und/oder einen Radialstift (174) aufweist.

6. Steckriegelschloß nach einem der vorhergehenden Ansprüche, dadurch gekennzeichnet, daß der Steckriegel (120) vom Riegelteil (170) unabhängig am Schloßgehäuse (140) starr oder verdrehbar angebracht ist.

7. Steckriegelschloß nach einem der vorhergehenden Ansprüche, dadurch gekennzeichnet, daß das Schloßgehäuse (140; 340) am Schloßhalter (116) in den beiden Endstellungen je über eine Nut-Feder-Verbindung (151, 155) anbringbar ist, wobei vorzugsweise die Längsrichtung der Nut (151) bzw. der Feder am Schloßgehäuse (140;340) parallel zur Steckriegellängsachse (130) verläuft.

8. Steckriegelschloß nach einem der vorhergehenden Ansprüche, dadurch gekennzeichnet, daß das Schloßgehäuse (140; 340) in wenigstens einer der Endstellungen zwei einander gegenüberliegende Ränder, bevorzugt Außenränder (155; 255), des Schloßhalters (116, 216) hintergreift.

9. Steckriegelschloß nach einem der vorhergehenden Ansprüche, dadurch gekennzeichnet, daß der Schloßhalter (116, 216) im wesentlichen quadratischen Umriß aufweist.

10. Steckriegelschloß nach einem der vorhergehenden Ansprüche, dadurch gekennzeichnet, daß die gegenüberliegenden Ränder (155, 255) des Schloßhalters (116, 216) vom Träger (112a) weg gekröpft ausgebildet sind.

11. Steckriegelschloß nach Anspruch 10, dadurch gekennzeichnet, daß der Schloßhalter (116, 216) eine bevorzugt quadratische Bodenwand (117a), von der Bodenwand (117a) abstehende Seitenwände (117b) sowie einen umlaufenden, von den Seitenwänden (117b) nach außen abstehenden Umfangsrand (117c) bevorzugt mit quadratischem Umriß aufweist.

12. Steckriegelschloß nach einem der vorhergehenden Ansprüche, dadurch gekennzeichnet, daß der Schloßhalter (116, 216) einen vorzugsweise kreisförmigen Anschweißwulst (150) an einer Plattenseite, ggf. an der Außenseite der Bodenwand (117a), aufweist.

13. Steckriegelschloß nach einem der Ansprüche 8 bis 12, dadurch gekennzeichnet, daß das Schloßgehäuse (140;340) wenigstens zwei zueinander parallele, voneinander beabstandete, hinterschnittene Führungsleisten (149, 148) aufweist, welche zwei gegenüberliegende Ränder (155a, 155b bzw. 155c, 155d) des Schloßhalters (116, 216) in der ersten und/oder zweiten Endstellung übergreifen.

14. Steckriegelschloß nach Anspruch 13, dadurch gekennzeichnet, daß am Schloßgehäuse (140;340) am Ende der Führungsleisten (149,148) ein Anschlag (kreisförmige Schloßplatte 141a) für den Schloßhalter (116, 216) ausgebildet ist.

15. Steckriegelschloß nach Anspruch 4 und einem der Ansprüche 8 bis 14, dadurch gekennzeichnet, daß das Riegelteil (radialer Stift 174) in seiner Sperrstellung (174") in eine Eingriffsausnehmung (272) des Schloßhalters (216) eingreift oder an demjenigen Rand (155) des Schloßhalters (116) anliegt, welcher dem in der betreffenden Endstellung am Anschlag anliegenden Rand (155) des Schloßhalters (116) gegenüberliegt.

16. Steckriegelschloß nach einem der vorhergehenden Ansprüche, dadurch gekennzeichnet, daß das Schloßgehäuse (140) mehrere, das Schloßteil (120) wenigstens teilweise umgebende, flächig aneinander anliegende, miteinander starr verbundene, vorzugsweise miteinander vernietete Schloßplatten (141) aufweist.

17. Steckriegelschloß nach Anspruch 16 und einem der Ansprüche 13 bis 15, dadurch gekennzeichnet, daß wenigstens ein Teil der Schloßplatten (141b, 141c) mit Vorsprüngen (149, 148) versehen sind, die die beiden Führungsleisten bilden.

18. Steckriegelschloß nach Anspruch 14 und 15 oder 16, dadurch gekennzeichnet, daß wenigstens eine Schloßplatte (141a) eine den Anschlag bildende Ausformung aufweist.

19. Steckriegelschloß nach Anspruch 17, dadurch gekennzeichnet, daß die wenigstens eine Schloßplatte (141a) kreisförmigen Umriß aufweist mit einem in den lichten Abstandsbereich zwischen den Führungsleisten (149, 148) hineinreichenden Umfangsbereich.

20. Steckriegelschloß nach einem der Ansprüche 16 bis 19, dadurch gekennzeichnet, daß wenigstens ein Teil (141c) der Schloßplatten (141) mit Durchgängen (153) für den Riegel (174) ausgeführt ist (Figuren 15 und 16).

21. Steckriegelschloß nach einem der vorhergehenden Ansprüche, dadurch gekennzeichnet, daß das Schloßgehäuse (340) im wesentlichen von zwei schubladenartig ineinander gesteckten, vorzugsweise durch Verschweißen miteinander verbundenen Gehäuseteilen (402, 404), vorzugsweise aus Stahlblech, gebildet ist.

22. Steckriegelschloß nach Anspruch 21, dadurch gekennzeichnet, daß ein erstes (402) der beiden Gehäuseteile (402, 404) eine (402a) der beiden zur Riegelachse (330) im wesentlichen senkrechten Stirnwände und eine Gehäuseseitenwand (414) bildet, und daß das zweite Gehäuseteil (404) die andere Stirnwand (442) sowie die restliche Gehäuseseitenwand bildet, und daß die Schubladen-Steckrichtung im wesentlichen parallel zur Riegelachse (330) verläuft.

23. Steckriegelschloß nach Anspruch 22, dadurch gekennzeichnet, daß die vom ersten Gehäuseteil (402) gebildete Gehäuseseitenwand (414) zur Anlage an der dem Schloßteil (320) zugewandten Plattenvorderseite des plattenförmigen Schloßträgers (116) ausgebildet ist, und daß das zweite Gehäuseteil (404) mit Randstreifen (420) die zur Riegelachse (330) im wesentlichen parallelen Ränder (410) der Anlage-Seitenwand (414) des ersten Gehäuseteils (402) derart übergreift, daß die Randstreifen

0102621

(420) des zweiten Gehäuseteils die entsprechenden Plattenränder des Schloßhalters (116) umgreifen und an der Plattenrückseite anliegen.

24. Steckriegelschloß nach Anspruch 23, dadurch gekennzeichnet, daß Randstreifen (414) beider zur Riegelachse (330) paralleler Ränder der Anlage-Seitenwand (414) des ersten Gehäuseteils (402) von der Seitenwandebene in Richtung zu den Randstreifen (420) des zweiten Gehäuseteils hin umgebogen sind und vorzugsweise mit einer der Plattenranddicke (i) des Schloßträgers (116) im wesentlichen entsprechenden Länge über die Anlage-Seitenwand (414) vorspringen, und daß die Randstreifen (414, 420) des ersten und zweiten Gehäuseteils (402 und 404) zusammen mit der Anlage-Seitenwand (414) Führungsnuten (151) für die Plattenränder des Schloßhalters (116) bilden.

25. Steckriegelschloß nach einem der vorhergehenden Ansprüche, dadurch gekennzeichnet, daß die Ausnehmung-Vorsprung-Verbindung zwischen Schloßhalter (116) und Schloßgehäuse (340) derart keilig ausgebildet ist, daß bei Annäherung der gegeneinander bewegten Teile-Schloßhalter und Schloßgehäuse in die gegenseitige Endstellung sich eine Bewegungsspielabnahme und schließlich eine gegenseitige Klemm-Festlegung ergibt.

26. Steckriegelschloß nach Anspruch 25, dadurch gekennzeichnet, daß das Nachlaufende wenigstens einer der beiden am Schloßgehäuse (340) vorgesehenen Teilnuten zur Aufnahme eines jeweiligen Plattenrandes des Schloßträgers (116) in Richtung zur anderen Teilnut hin gewölbt oder abgeschrägt ist, vorzugsweise durch entsprechendes Einwärtsbiegen des entsprechenden Endes (420a) des Randstreifens (420) des ersten Gehäuseteils (402).

27. Steckriegelschloß nach Anspruch 25 oder 26, dadurch gekennzeichnet, daß am Schloßgehäuse (340) wenigstens ein gewölbter oder keilförmiger Vorsprung (432) zur klemmenden Anlage an der dem Schloßteil (320) zugewandten Plattenvorderseite oder Plattenrückseite des plattenförmigen Schloßträgers (116) vorgesehen ist, vorzugsweise in Form einer entsprechenden Ausprägung oder Ausklinkung der Anlagen-Seitenwand (414) des ersten Gehäuseteils, vorzugsweise im Bereich des Nachlaufendes der Teilnuten.

28. Steckriegelschloß nach einem der Ansprüche 25 bis 27, dadurch gekennzeichnet, daß das Riegelteil (Exzenterscheibe 374) im Bereich des Nachlaufendes des Schloßhalters (116) an diesen unter Federvorspannung (Feder 400) angreift bei auf den Schloßhalter (116) aufgestecktem Schloßgehäuse (340).

29. Steckriegelschloß nach Anspruch 28, dadurch gekennzeichnet, daß das Riegelteil (Exzenterscheibe 374) mit einer gewölbten oder abgeschrägten Andruckfläche (452) an eine zur Riegelachse (330) senkrechte Querkante (454) des Schloßhalters (116) angreift im Sinne eines Verschwenkens des Schloßhalters (116) gegenüber dem Schloßgehäuse (340) um eine zur Querkante parallele Schwenkachse bis zur Anlage an einem Anschlag (Randstreifen 420).

30. Steckriegelschloß nach einem der vorhergehenden Ansprüche, dadurch gekennzeichnet, daß das vorzugsweise angenähert scheibenförmige Riegelteil (Exzenterscheibe 374) auf vorzugsweise teilzylinderring-förmige Mitnahmevorsprünge (458) des Zylinderkerns (370) eines Zylinderschlosses (360) aufgesteckt ist.

31. Steckriegelschloß nach Anspruch 30, dadurch gekennzeichnet, daß das Riegelteil (Exzenterscheibe 374) mit einer zentralen Führungsöffnung (408) für einen Lagerzapfen (406) des Steckriegels (322) ausgebildet ist.

32. Steckriegelschloß nach einem der vorhergehenden Ansprüche, dadurch gekennzeichnet, daß beim Übergang des
Riegelteils (Exzenterscheibe 374) aus einer Freigabestellung außer Eingriff mit dem Schloßhalter (116) in eine
Schließstellung mit Eingriff mit dem Schloßhalter
(116) ein Druckpunkt zu überwinden ist.

33. Steckriegelschloß nach Anspruch 32, dadurch gekennzeichnet, daß der Druckpunkt von einem Rastvorsprung
(470) des Gehäuses (340) und einer mit diesem zusammenwirkenden, in Richtung parallel zur Riegelachse (330)
axial vorstehenden Nase (450) des axial in Richtung zum
Rastvorsprung (470) federvorgespannten Riegelteils
(Exzenterscheibe 374) gebildet ist.

34. Steckriegelschloß nach einem der vorhergehenden Ansprüche, dadurch gekennzeichnet, daß das Gegenlager
(518) von einem im wesentlichen U-förmigen, mit dem
Mittelschenkel (424) der U-Form am Träger (112b) befestigten Grundkörper (520), vorzugsweise in Form eines
einstückigen Stanz- und Prägeteils, und einer auf den
Grundkörper (520) gesteckten, die Seitenschenkel (530,
532) der U-Form übergreifenden Kappe (522), vorzugsweise Kunststoffkappe, gebildet ist.

35. Steckriegelschloß nach Anspruch 34, dadurch gekennzeichnet, daß die Kappe (522) mit dem Grundkörper (520)
verrastbar ist, vorzugsweise über wenigstens einen
in je eine Ausnehmung (540) einer (530) der beiden Seitenschenkel (530, 532) eingreifenden Rastvorsprung
(538) der Kappe (522) und/oder über wenigstens einen
an die dem Mittelschenkel (524) zugewandte Unterseite
eines von einem Seitenschenkel (532) in Richtung zum

-9-

anderen Seitenschenkel (530) hin abgebogenen Randlappens (550) angreifenden Rastvorsprung (536).

36. Steckriegelschloß nach Anspruch 35, gekennzeichnet durch eine am entsprechenden Seitenschenkel (530) ausgebildete Einweisschrägfläche (558) für den zugeordneten Rastvorsprung (538).

37. Steckriegelschloß nach einem der Ansprüche 34 bis 36, gekennzeichnet durch wenigstens eine Kappen-Versteifungsrippe (560) im Kappeninneren, welche mit einer Steckriegel-Ausnehmung (566) versehen ist.

38. Rohrschellenbefestigung, insbesondere für einen Schloßhalter (116) und/oder ein Gegenlager (518) des Steckriegelschlosses nach einem der vorhergehenden Ansprüche, mit einem das Rohr (716) umgreifenden Bügel (718) und einem sich am Rohr (716) abstützenden, die Enden (720) des Bügels (718) halternden Abstützteil (702), dadurch gekennzeichnet, daß das Abstützteil mit in Richtung der Rohrachse (704) voneinander beabstandeten Stützen (706, 708) am Rohr (716) anliegt, daß im Bereich zwischen den Stützen (706, 708) ein vorzugsweise plattenförmiges Zugelement (710) vorgesehen ist, an welches die beiden Enden (720) des Bügels (718) angreifen, und daß eine zwischen Abstützteil (702) und Zugelement (710) wirkende, im wesentlichen radial zur Rohrachse (704) angeordnete Anzugsschraube (714) vorgesehen ist.

39. Rohrschellenbefestigung nach Anspruch 38, dadurch gekennzeichnet, daß die Stützen (706,708;808,880) auf ihren, dem Rohr (716;816) zugewandten Seiten Mulden (764,766;864,882) zur Aufnahme des Rohrs (716;816) aufweisen.

40. Rohrschellenbefestigung nach Anspruch 39, dadurch gekennzeichnet, daß die durch die Mulden (864, 882) gehende Fluchtlinie (884) oder Mittelgerade spitzwinkelig geneigt (Winkel β') zur quer zu den Stützen (808,880) gerichteten Mittelgeraden (872) des Abstützteils (802) verläuft.

41. Rohrschellenbefestigung nach einem der Ansprüche 38 bis 40, dadurch gekennzeichnet, daß die Bügelenden (720) die zur Rohrachse (704) parallelen Längsränder (722) des plattenförmigen Zugelements (710) umgreifen und zur Anlage an die vom Rohr (716) abgewandte Rückseite (724) des Zugelements (710) umgebogen sind.

42. Rohrschellenbefestigung nach Anspruch 41, dadurch gekennzeichnet, daß die zur Rohrachse (704) parallelen Längsränder (736) des vorzugsweise als Blechprägeteil ausgebildeten Abstützteils (702) zur Abdeckung der umgebogenen Bügelenden (720) umgebogen sind.

43. Rohrschellenbefestigung nach einem der Ansprüche 38 bis 42, dadurch gekennzeichnet, daß zur Erleichterung des Einschiebens der umgebogenen Bügelenden (720) das Zugelement (710) mit Einweis-Schrägflächen (742) versehen ist.

44. Rohrschellenbefestigung nach einem der Ansprüche 38 bis 43, dadurch gekennzeichnet, daß die Anzugsschraube als Kopfschraube (714) ausgebildet ist, welche in ein Innengewinde (712) des Zugelements (710) eingeschraubt ist, und daß vorzugsweise das zu befestigende Teil, ggf. der Schloßhalter (116') bzw. das Gegenlager (518) von der Kopfschraube (714) durchsetzt und zwischen Kopf und Abstützteil (702) eingespannt ist.

45. Steckriegelschloß nach einem der Ansprüche 1 bis 37, gekennzeichnet durch ein Schloßhalter-Anschweiß- oder -Anlötteil (826) und eine gesonderte, am Anschweiß- bzw. Anlötteil (826) starr anbringbare, vorzugsweise anschraubbare Schloßhalterplatte (815).

46. Steckriegelschloß nach Anspruch 45, dadurch gekennzeichnet, daß zur Verdrehsicherung am Anschweiß- bzw. Anlötteil (826) und/oder an der Schloßhalterplatte (815) wenigstens ein in Richtung senkrecht zur Plattenebene vorstehender Vorsprung (836) vorgesehen ist, welcher in eine entsprechende Ausnehmung (834) des jeweils anderen Teils eingreift.

47. Schloß, insbesondere Steckriegelschloß nach einem der Ansprüche 1 bis 37,45,46, mit einer am Schloßgehäuse zwischen Schlüsselloch-Freigabestellung und einer Schlüsselloch-Abgabestellung verschwenkbar angebrachten Schlüsselloch-Abdeckung, dadurch gekennzeichnet, daß die Schlüsselloch-Abdeckung von einem Schenkel (910) eines im wesentlichen U-förmigen Schwenkteils (900) gebildet ist, dessen beide Seitenschenkel (910,914) am Gehäuse (340) um eine gemeinsame Achse (902) verschwenkbar angebracht sind.

48. Schloß nach Anspruch 47, dadurch gekennzeichnet, daß die beiden Seitenschenkel (910,914) jeweils mit einem zum anderen Seitenschenkel hin vorstehenden Lagervorsprung (930,932) versehen sind, welche in entsprechende Lagerausnehmungen (928,934) des Schloßgehäuses (340) eingreifen.

49. Schloß nach Anspruch 47 oder 48, dadurch gekennzeichnet, daß die Schwenkachse (902) im wesentlichen parallel zur Schlüssel-Einführrichtung (Achse 330) verläuft.

50. Schloß nach Anspruch 49, dadurch gekennzeichnet, daß bei einem Gehäuse (340) eines Steckriegelschlosses mit Schlüsselloch (936) an einer Gehäuseseite und Steckriegel (332) an der gegenüberliegenden Gehäuseseite der steckriegelseitige Seitenschenkel (914) des Schwenkteils (900) mit einer Steckriegel-Ausnehmung (921) versehen ist, welcher den Steckriegel (322) in der Schlüsselloch-Abdeckstellung aufnimmt.

51. Schloß nach einem der Ansprüche 47 bis 50, dadurch gekennzeichnet, daß das Schwenkteil (900) von einem, vorzugsweise einschließlich der Lagervorsprünge (930, 932), durchgehend einstückigen Kunststoffteil gebildet ist.

FIG. 2

FIG.1

FIG. 3

FIG. 4

FIG. 5

FIG. 6

2/8

0102621

## FIG. 7

## FIG. 8

## FIG. 9

0102621

FIG. 10

FIG. 11

0102621

FIG. 12

FIG. 13

FIG. 14

6/8

0102621

FIG. 15

FIG. 16

FIG. 17

FIG. 18

FIG. 19

## FIG. 20

## FIG. 21

## FIG. 22

## FIG. 23

FIG. 24

FIG. 25

FIG. 26

FIG. 27

8/8

010 2621